# EUROPÄISCHE PATENTSCHRIFT

(11) **EP 1 444 963 B1**
(45) Veröffentlichungstag und Bekanntmachung des Hinweises auf die Patenterteilung: **06.12.2006**
(21) Anmeldenummer: 03100245.4
(22) Anmeldetag: 05.02.2003
(51) Int. Cl.: A61C 8/00

(54) **Verlängerungsstück für ein Dentalimplantat, Übertragungshilfe und Verfahren zum Erstellen einer Basis für ein Retentionselement**
Extension piece for a dental implant, transmission aid, and method for preparing a base for a retention piece
Pièce de raccord pour un implant dentaire, appareil de positionnement, et méthode de préparation une base pour une pièce de support

(43) Veröffentlichungstag der Anmeldung: 11.08.2004
(73) Patentinhaber: Straumann Holding AG, 4002 Basel (CH)
(72) Erfinder: Ebi, Daniel, 4410, Liestal (CH); Herweg, Holger, 79106, Freiburg i. Br. (DE)
(74) Vertreter: Schaad, Balass, Menzl & Partner AG

(56) Entgegenhaltungen:
- US-A- 5 947 736
- US-A1- 2001 034 008
- US-A1- 2002 127 515

## Beschreibung

Die Erfindung betrifft ein Verlängerungsstück für ein Dentalimplantat, eine Übertragungshilfe zum Übertragen der Position eines Dentalimplantates und eines Verlängerungsstücks auf ein Arbeitsmodell sowie ein Verfahren zum Erstellen einer Basis für ein Retentionselement und zum Abformen der radialen und axialen Lage eines Dentalimplantates mit einem Verlängerungsstück mit den Merkmalen des Oberbegriffs der unabhängigen Patentansprüche.

Es ist bekannt, auf Dentalimplantate, welche in einem Kieferknochen eines Patienten implantiert sind, Verlängerungsstücke anzubringen, welche als Tragstruktur für Zahnaufbauten dienen. Solche Verlängerungsstücke werden häufig auch Abutments oder Sekundärteile genannt.

Die Verlängerungsstücke werden auch zur Fixierung von Zahnprothesen mit mehreren Zähnen verwendet. Typischerweise wird eine Zahnprothese auf mehreren solchen, auf Implantaten gehaltenen Verlängerungsstücken befestigt. Dabei ist es wichtig, dass auch bei nicht genau parallel gesetzten Implantaten die Achsrichtung der Verlängerungsstücke parallel verläuft, so dass die Prothese in einer definierten Aufsetzrichtung aufgesetzt werden kann. Es ist bereits bekannt, Verlängerungsstücke so zu bearbeiten, dass eine definierte Aufsetzrichtung erzielt werden kann (siehe beispielsweise Technoinfo, "Die Anwendung des Fräszylinders für das Octa-System" von Straumann).

Ausserdem ist es bekannt, das Verlängerungsstück mit einem sogenannten Kugelanker zu versehen. Das in das Implantat einschraubbare Verlängerungsstück ist dabei auf seiner Oberseite mit einem kugelartigen Vorsprung versehen, auf welchem eine Prothese mittels entsprechenden Halteelementen in der Art eines Druckknopfes gehalten werden kann (siehe beispielsweise Technoinfo, "Die Anwendung des retentiven Kugelankers" von Straumann oder "Das Bone Graft System" von Straumann).

Es ist ausserdem allgemein bekannt, die Situation von Implantaten und Verlängerungsstücken im Mund eines Patienten auf ein Arbeitsmodell zu übertragen. Der Zahntechniker erstellt dann an Hand der Position der Implantate und der Verlängerungsstücke im Arbeitsmodell die Zahnprothese. Zur Übertragung der Situation auf das Arbeitsmodell werden sogenannte Abformelemente verwendet, welche die axiale und radiale Lage von Implantat und Verlängerungsstück in eine Abdruckmasse übertragen. Es sind Abformkappen bekannt, welche mit dem Implantat verschraubt werden. Es sind aber auch Abformkappen bekannt, welche auf einer Implantatschulter (siehe z.B. EP 879 024) oder auf einem Verlängerungsstück (siehe z.B. DE 44 15670) aufgeschnappt oder aufgeklemmt werden können. Aus WO 02/087461 ist ausserdem ein Implantat bekannt, bei dem das Implantat in einem Aufbewahrungsbehälter mittels einer Abformkappe befestigt ist.

Die Abformkappe wird während der Abformung eines Abdrucks der Situation im Mund des Patienten verwendet und verbleibt in der Abdruckmasse, wenn die Abdruckmasse vom Implantat entfernt wird.

Alle diese bekannten Verlängerungsstücke und Übertragungshilfen sind aber mit bestimmten Nachteilen versehen, wenn das Verlängerungsstück als Basis für ein Retentionselement für eine Zahnprothese dient. Insbesondere ist es bei nicht genau parallel zueinander gesetzten Implantaten schwierig, mehrere Verlängerungsstücke so zu bearbeiten und einzusetzen, dass die Aufschubrichtung für eine Prothese für alle aufgesetzten Verlängerungsstücke parallel ist. Die Verwendung von bekannten Abdrucksystemen ist für diesen Zweck unbefriedigend. Der Verlauf des Innengewindes am Implantat lässt sich mit bekannten Abdrucksystemen nicht abformen, da der Gewindeanfang zu an einem Implantat vorgesehenen Referenzflächen, beispielsweise einem Innenachtkant, nicht in einer vordefinierten Relation steht. Eine Abformung des Gewindeverlaufs durch Referenzierung von solchen Flächen ist daher nicht möglich.

Eine Bestimmung der Lage des Implantates in Umfangsrichtung ist bei der Verwendung von sogenannten Massiv-Sekundärteilen nicht möglich, da dieses Sekundärteil/Verlängerungsstück die an der Innenkontur des Implantates zur Definition der Umfangsrichtung vorgesehenen Referenzflächen abdeckt.

Das in EP 879 924 gezeigte Sekundärteil dient insbesondere zur Abstützung einer Einzelzahnversorgung. Das Sekundärteil ist nicht als Basis für ein Retentionselement geeignet. Eine Abformung an einer nicht rotationssymmetrischen Referenzfläche des Verlängerungsstücks wie in EP 879 024 gezeigt ist im Hinblick auf die Verwendung des Verlängerungsstücks als Basis für ein Retentionselement ebenfalls mit Nachteilen behaftet. Einerseits ist die genaue Lage des Verlängerungsstücks in axialer Richtung und in Umfangsrichtung auf Grund der gegenseitigen Anlage von Verlängerungsstück und Innenkontur des Implantates in einer relativ steilen Konusfläche nicht genau definiert.

Andererseits ist das Verhältnis zwischen Gewindeanfang des Verlängerungsstücks und der Referenzfläche am Verlängerungsstück im Fall von als Basis für ein Retentionselement dienenden Verlängerungsstücken, welche typischerweise aus Edelmetall gefertigt sind, nicht immer genau gleich definiert. Die Verwendung eines Manipulierimplantates mit einem zum Verlängerungsstück identischen, einstückig mit dem Manipulierimplantat gefertigten Element (wie in EP 879 024 gezeigt) ist daher ebenfalls schwierig.

US 2001/0034008 offenbart ein Dentalimplantat, in welches ein Verlängerungsstück einschraubbar ist. Das Verlängerungsstück weist einerseits einen Gewindezapfen zum Einschrauben in das Dentalimplantat und anderseits einen Kopfteil auf. Im zusammengeschraubten Zustand von Verlängerungsstück und Dentalimplantat steht der Kopfteil als einziges Element des Verlängerungsstücks über das Dentalimplantat vor. Der gesamte Kopfteil bildet eine Umfangslage definierende Referenzform mit Referenzfläche aus, mittels welcher die Umfangslage des Verlängerungsstücks auf ein Arbeitsmodell übertragbar ist. Weiter offenbart US 2001/0034008 eine Übertragungshilfe, die dazu bestimmt ist, die axiale und radiale Lage des Verlängerungsstücks auf ein Arbeitsmodell zu übertragen.

Es ist eine Aufgabe der vorliegenden Erfindung, die Nachteile des Bekannten zu vermeiden, insbesondere ein Verlängerungsstück für ein Dentalimplantat zu schaffen, welches auch bei nicht parallel zueinander gesetzten Implantaten eine parallele Aufschubrichtung eines am Verlängerungsstück zu befestigenden Zahnersatzes erlaubt. Eine weitere Aufgabe der Erfindung besteht darin, eine Übertragungshilfe und ein Verfahren zu schaffen, mittels welchen die Lage des Implantates und des Verlängerungsstücks im Mund eines Patienten auf einfache Weise zuverlässig auf ein Arbeitsmodell übertragen werden kann. Das Abformverfahren und das Abformsystem sowie das Verlängerungsstück sollen einfach in der Handhabung und möglichst kostengünstig in der Herstellung sein.

Erfindungsgemäss werden diese Aufgaben mit einem Verlängerungsstück, einer Übertragungshilfe und einem Verfahren gemäss den Merkmalen des kennzeichnenden Teils der unabhängigen Patentansprüche 1, 7 und 15 gelöst.

Das Verlängerungsstück für ein Dentalimplantat gemäss der Erfindung weist ein Kopfteil auf. Das Kopfteil dient als Basis für ein Retentionselement. Das Retentionselement dient zur Befestigung eines Zahnersatzes. Das Verlängerungsstück ist ausserdem mit einem Gewindezapfen versehen, mittels welchem es in das Dentalimplantat einschraubbar ist. Erfindungsgemäss weist das Verlängerungsstück wenigstens eine Referenzform auf, mittels welcher die Lage des Verlängerungsstückes in Umfangsrichtung gesehen auf ein Arbeitsmodell übertragbar ist. Als Referenzform kann eine beliebige Formgebung am Verlängerungsstück verwendet werden, welche eine Übertragung der Lage des Verlängerungsstückes in Umfangsrichtung gesehen erlaubt. Die Referenzform kann typischerweise eine nicht rotationssymmetrische Referenzfläche sein. Sie kann aber auch beispielsweise durch eine geeignet angeordnete Bohrung am Verlängerungsstück gebildet sein. Hier und im Folgenden wird der Begriff Referenzfläche generisch zur Bezeichnung jeder denkbaren Art einer geometrischen Form verwendet, welche eine Übertragung der Lage des Verlängerungsstücks in Umfangsrichtung erlaubt. Dank der wenigstens einen Referenzfläche kann die Lage des Verlängerungsstückes in Umfangsrichtung genau erfasst und auf das Arbeitsmodell übertragen werden. Zwischen der Lage der Referenzfläche und dem Gewindeanfang am Gewindezapfen besteht für jedes einzelne Verlängerungsstück eine genau definierte Beziehung. Diese Beziehung kann auf das Arbeitsmodell übertragen werden, wenn das Verlängerungsstück in der nachstehend beschriebenen Art und Weise als Übertragungshilfsmittel eingesetzt wird. Die Referenzfläche ist typischerweise nicht rotationssymmetrisch.

Gemäss einer bevorzugten Ausführungsform der Erfindung weist das Verlängerungsstück eine Gegenschulter auf, mittels welcher das Verlängerungsstück auf einer Schulter des Implantates abstützbar ist. Auf Grund des Kontaktes zwischen Gegenschulter und Implantatschulter lässt sich die Position des Verlängerungsstücks in Achsrichtung genau definieren, weil sie nicht wie z.B. in EP 879 024 gezeigt durch Kontakt zwischen zwei steilen Konusflächen definiert ist. Durch die Referenzfläche wird die Umfangslage referenziert durch den Kontakt der Schulter die Achsposition.

Gemäss einer weiteren bevorzugten Ausführungsform weist das Verlängerungsstück eine erste Kontur auf, auf welche eine Übertragungshilfe mit einer entsprechend geformten zweiten Kontur aufklemmbar und/oder aufschnappbar ist. Mit dieser Übertragungshilfe lässt sich die Position des Verlängerungsstücks in der Abdruckmasse wie nachstehend beschrieben während der Abdrucknahme genauer definieren und beibehalten.

Gemäss einem besonders bevorzugten Ausführungsbeispiel ist das Kopfteil im wesentlichen zylindrisch ausgebildet. Die Referenzfläche wird dabei vorteilhaft durch eine parallel zur Schraubachse des Verlängerungsstücks verlaufende Schnittfläche gebildet, so dass das Verlängerungsstück an seinem oberen Ende durch einen Halbzylinder gebildet ist. Eine solche Referenzfläche lässt sich besonders einfach herstellen. Diese Referenzfläche, welche bei definitivem Aufsetzen des Verlängerungsstücks auf das Implantat nicht mehr benötigt wird, kann ausserdem bei der Bearbeitung des Verlängerungsstücks zur Aufnahme eines Retentionselementes auf einfache Weise entfernt werden. Ausserdem eignen sich eine derart ausgebildete Referenzfläche besonders zur Verwendung im Zusammenhang mit einer einfach ausgebildeten Übertragungshilfe.

Gemäss einer weiteren bevorzugten Ausführungsform weist das Verlängerungsstück ausserdem eine nicht zylindrische Aussenkontur mit Eindrehflächen auf. Das Verlängerungsstück kann mit einem Werkzeug, welches an den Eindrehflächen eingreift, einfach in ein Implantat eingeschraubt werden. Dadurch ist es möglich, die Einschraubkraft in der nachstehend beschriebenen Art und Weise genau zu kontrollieren.

Es ist ausserdem denkbar und bevorzugt, im Bereich des Übergangs von der Referenzfläche zu der Aussenfläche des Halbkreiszylinders eine Abschrägung vorzusehen. Die Abschrägung vermeidet einerseits die Verletzung der nachstehend beschriebenen Übertragungshilfe aus Kunststoff. Ausserdem ist das Aufsetzen einer solchen Übertragungshilfe dank der Abschrägung einfacher.

Das Verlängerungsstück dient wie vorstehend beschrieben als Basis für ein Retentionselement. Solche Retentionselemente lassen sich beispielsweise durch Löten befestigen. Gemäss einer bevorzugten Ausführungsform ist das Verlängerungsmaterial aus einer metallischen, nicht oxidierenden, hoch schmelzenden Legierung zusammengesetzt. Beispielsweise kann die Zusammensetzung 60% Au, 19% Pt, 20% Pd und 1% Ir aufweisen. Der Schmelzbereich dieser Legierung ist typischerweise zwischen 1400° und 1490° Grad.

Die erfindungsgemässe Übertragungshilfe dient zur Übertragung der Position eines Implantates und eines darin befestigten Verlängerungsstücks in Achsrichtung und in Umfangsrichtung auf ein Arbeitsmodell. Die Übertragungshilfe weist eine Transferform auf, welche komplementär zu einer Referenzform an einem Verlängerungsstück ausgebildet ist. Als Transferform kann eine beliebige Formgebung verwendet werden, welche eine Definition der Lage der Übertragungshilfe in Umfangsrichtung ermöglicht. Typischerweise kann die Transferform als aus einer Zylinderfläche ausgeschnittenen Referenzfläche gebildet werden. Es sind aber auch andere Formen wie beispielsweise Vorsprünge oder Vertiefungen an der Übertragungshilfe denkbar. Hier und im Folgenden wird der Begriff Transferfläche als generische Bezeichnung für jede Formgebung verwendet, welche eine Referenzierung in Umfangsrichtung erlaubt. Die Transferfläche kann daher auch Teil einer teilweise rotationssymmetrischen Form sein, beispielsweise durch ein Polygon gebildet sein. Aus Gründen der Eindeutigkeit sind allerdings nicht rotationssymmetrische Flächen bevorzugt, welche nur in einer Position zur Deckung gebracht werden können.

Die erfindungsgemässe Übertragungshilfe weist eine Sockelplatte auf, in welcher die Transferfläche angeordnet ist. Die Übertragungshilfe ist ausserdem mit Klemm- und/oder Schnappmitteln versehen, mittels welchen sie am Verlängerungsstück befestigbar ist. Die Sockelplatte weist eine in einer Abdruckmasse verankerbare Form auf. Die Form soll so gewählt werden, dass eine Rotation der Übertragungshilfe in der Abdruckmasse verhindert wird. Typischerweise kann die Sockelplatte eine nicht rotationssymmetrische Aussenkontur aufweisen und/oder mit Löchern versehen sein, durch welche die Abdruckmasse durchdringen kann und welche ein Drehen der Übertragungshilfe ebenfalls verhindern. Um ein Aspirieren während dem Aufsetzen der Abformhilfe auf das Verlängerungsstück zu verhindern, kann die Abformhilfe durch die Röhrchen mit einem Faden gesichert werden.

Gemäss einem bevorzugten Ausführungsbeispiel ist die Transferfläche der Übertragungshilfe Teil einer Wand einer halbzylindrischen Öffnung in der Sockelplatte. Die halbzylindrische Öffnung weist eine senkrecht zur Achse der Übertragungshilfe verlaufende Schnittfläche auf, welche mit einer wie vorstehend beschriebenen Schnittfläche eines Halbzylinders am Kopfteil einer Verlängerungsstücks komplementär ausgebildet und in Kontakt bringbar ist. Im Übergangsbereich zwischen der Transferfläche und der halbzylindrischen Innenfläche der Öffnung kann ausserdem eine Aussparung vorgesehen sein. Die Übertragungshilfe wird typischerweise im Kunststoffspritzgussverfahren hergestellt. Dabei lassen sich nicht ganz genau definierte Ecken erzeugen. Rundungen im Bereich des Übergangs könnten dazu führen, dass die Übertragungshilfe schlecht auf das entsprechende Verlängerungsstück aufgesetzt werden könnte. Dieses Problem wird durch die zusätzliche Aussparung behoben.

Die Klemm- und/oder Schnappmittel der erfindungsgemässen Übertragungshilfe können besonders bevorzugt durch eine an der Sokkelplatte angeordnete zirkuläre Lippe gebildet sein, die eine zweite Kontur, insbesondere einen Wulst aufweist, welche komplementär zu einer, insbesondere als Nut ausgebildeten ersten Kontur des Verlängerungsstücks ausgebildet und darauf aufschnappbar und/oder aufklemmbar ist. Selbstverständlich kann auch an der Übertragungshilfe eine Nut und am Verlängerungsstück ein Wulst vorgesehen werden.

Die Übertragungshilfe ist vorzugsweise einstückig ausgebildet, typischerweise aus einem elastischen Kunststoffmaterial. Eine derartige Übertragungshilfe ist einerseits einfach und kostengünstig herzustellen, beispielsweise im Spritzgussverfahren. Andererseits erlaubt eine solche Materialauswahl ein einfaches Aufschnappen.

Die Öffnung in der Übertragungshilfe kann sich in einem weiteren bevorzugten Ausführungsbeispiel insbesondere quer durch die Sokkelplatte hindurch erstrecken. Auf der einen Seite kann das Verlängerungsstück mit der Referenzfläche in die Öffnung eingesteckt werden. Auf der anderen Seite kann durch die Öffnung in der Sockelplatte Abdruckmasse bis an das in die Übertragungshilfe eingesetzte Verlängerungsstück gelangen und so dessen Position zusammen mit der Übertragungshilfe genau definieren.

Gemäss einem weiteren bevorzugten Ausführungsbeispiel weist die Sockelplatte der Übertragungshilfe Löcher auf, welche wie oben beschrieben zur Aspirationssicherung dienen.

Ein weiterer Aspekt der vorliegenden Erfindung besteht in der Verwendung eines bearbeitbaren, insbesondere eines beschleifbaren Verlängerungsstücks für ein Dentalimplantat als Übertragungsteil seiner Position auf einem Dentalimplantat in Achs- und in Umfangsrichtung und als Basis für ein Retentionselement. Erfindungsgemäss wird das Verlängerungsstück also nicht nur als Basis für ein Retentionselement sondern auch zum Übertragen seiner eigenen Position in fest geschraubter Stellung auf dem Implantat verwendet. Auf diese Weise kann auf ein zusätzliches Übertragungsteil, wie es beispielsweise in EP 879 024 beschrieben ist, verzichtet werden. Fehlerquellen werden minimiert. Insbesondere bleibt die für jedes Verlängerungsstück individuelle Beziehung zwischen Transferfläche und Gewindeanfang genau erhalten.

Ein weiterer Aspekt der Erfindung besteht in der Kombination einer wie vorstehend beschriebenen Übertragungshilfe mit einem wie vorstehend beschriebenen Verlängerungsstück. Die Transferfläche der Übertragungshilfe ist dabei komplementär zu der Referenzfläche des Verlängerungsstücks ausgebildet.

Das erfindungsgemässe Verfahren dient in erster Linie zum Abformen der Lage in Umfangsrichtung und in Achsrichtung eines in einem Kieferknochen eines Patienten implantierten Dentalimplantates und eines darauf befestigten Verlängerungsstückes auf ein Arbeitsmodell. Das erfindungsgemässe Verfahren betrifft ausserdem die Erstellung einer in das Implantat einschraubbaren Basis für ein Retentionselement. Die Abformung der Situation im Mund ist dabei der erste Verfahrensschritt.

Gemäss dem erfindungsgemässen Verfahren wird zuerst ein Verlängerungsstück als Basis für ein Retentionselement in jedes dafür vorgesehene Implantat im Mund des Patienten eingeschraubt. Hier und im Folgenden wird das Verfahren an Hand eines Implantats mit einem Verlängerungsstück gezeigt. Selbstverständlich wird das Verfahren vorteilhaft insbesondere bei mehreren Implantaten und/oder Pfeilern angewendet(beispielsweise eine Restbezahnung mit Zahnstümpfen, welche neben Implantaten eine Basis für ein Retentionselement tragen). Die Einschraubung erfolgt mit einem vorbestimmten ersten Drehmoment. Auf diese Weise wird sichergestellt, dass die Lage des Verlängerungsstücks im Implantat genau reproduzierbar ist.

Im nächsten Schritt wird ein Abdruck der Situation des Implantates und des Verlängerungsstücks im Mund des Patienten erzeugt. Dazu wird in an sich bekannter Weise eine Abdruckmasse auf das Implantat aufgebracht. Die Abdruckmasse wird nach dem Aushärten entfernt. Nach dem Entfernen der Abdruckmasse aus dem Mund bleibt das Verlängerungsstück mit dem Implantat verbunden. Die Form des Verlängerungsstücks, insbesondere die Aussenkontur des Kopfteils, bleibt in der Abdruckmasse erhalten.

Anschliessend wird das Verlängerungsstück vom Implantat abgeschraubt und in der richtigen Position in der Abdruckmasse repositioniert. Bei einer bevorzugten vollkommen nicht rotationssymmetrischen Anordnung der Referenzfläche ist eine eindeutige Repositionierung des Verlängerungsstücks im Abdruck möglich.

Bei teilweiser Rotationssymmetrie, beispielsweise bei einer 180° Symmetrie sind zwar mehrere Positionen möglich. Der Anwender kann auf Grund der Kenntnis der Lage das Verlängerungsstück trotzdem präzise in der entsprechenden Stellung repositionieren.

Vor oder nachdem das Verlängerungsstück in den Abdruck repositioniert wird, wird das Verlängerungsstück mit einem zweiten Drehmoment in ein Manipulierimplantat eingeschraubt. Dieser Vorgang kann theoretisch erfolgen, wenn das Verlängerungsstück bereits in der Abdruckmasse repositioniert ist. Die Verbindung wird aber bevorzugt erzeugt, bevor das Verlängerungsstück im Abdruck repositioniert wird. Dies kann insbesondere deshalb vorteilhaft sein, weil mit dem Manipulierimplantat gewissermassen eine Halterung für das Verlängerungsstück zur Verfügung gestellt wird, so dass dessen Handhabung einfacher ist. Ausserdem besteht kein Risiko, dass das Verlängerungsstück durch Aufschrauben des Manipulierimplantates nachträglich im Abdruck verdreht wird.

Die Abdrucknahme erfolgt für alle Implantate und alle Verlängerungsstücke gemeinsam. Das Entfernen der Verlängerungsstücke von den Implantaten und das Repositionieren der Verlängerungsstücke im Abdruck erfolgt individuell.

In einem letzten Schritt wird ein Arbeitsmodell durch Eingiessen des oder der an den Verlängerungsstücken im Abdruck befestigten Manipulierimplantaten in eine Modellmasse, beispielsweise Gips erzeugt.

Nach dem Entfernen der Abdruckmasse von den eingegossenen Manipulierimplantaten und Verlängerungsstücken steht ein Arbeitsmodell zur Verfügung, bei dem die Lage der Verlängerungsstücke in Umfangsrichtung und in Achsrichtung genau der Lage der Verlängerungsstücke im Mund des Patienten entspricht. Ein Zahntechniker kann nun die Verlängerungsstücke entsprechend bearbeiten. Insbesondere erfolgt die Bearbeitung so, dass Retentionselemente so an den Verlängerungsstücken befestigt werden können, dass die Aufschubrichtung für alle Verlängerungsstücke bzw. für alle Implantate identisch ist.

Gemäss einem bevorzugten Ausführungsbeispiel des erfindungsgemässen Verfahrens wird vor der Abnahme des Abdrucks des Verlängerungselements auf das Verlängerungselement eine Übertragungshilfe aufgesetzt. Typischerweise kann die Übertragungshilfe aufgeklemmt oder aufgeschnappt werden. Beim Erzeugen des Abdrucks, das heisst beim Entfernen der ausgehärteten Abdruckmasse verbleibt die Übertragungshilfe in der Abdruckmasse. Durch die eingesetzte Übertragungshilfe ist das Repositionieren des Verlängerungsstücks im Abdruck präziser und einfacher.

Gemäss einem weiteren bevorzugten Ausführungsbeispiel ist das erste vorbestimmte Drehmoment grösser als das zweite Drehmoment. Das erste Drehmoment beträgt typischerweise etwa 35 Ncm. Das zweite Drehmoment entspricht etwa einem handfesten Eindrehen des Verlängerungsstücks auf das Manipulierimplantat. Damit das Verlängerungsstück vor der Abdrucknahme und das bearbeitete Verlängerungsstück nach Abdrucknahme und Bearbeitung in der genau gleichen Lage im Implantat eingesetzt ist, ist es wichtig, dass das Einschraubdrehmoment in das Implantat beide Male genau gleich gewählt ist. Dazu wird vorzugsweise ein Drehmomentinstrument verwendet, mittels welchem das Drehmoment beide Male gleich gewählt werden kann. Es hat sich in der Praxis gezeigt, dass ein Drehmoment von 35 Ncm zum Befestigen des Verlängerungsstücks im Implantat besonders geeignet ist. Das Drehmoment, mit welchem das Manipulierimplantat auf das Verlängerungsstück aufgeschraubt wird, ist weniger wesentlich. Die genaue Position des Verlängerungsstücks in Umfangrichtung wird durch den Abdruck vorgegeben. Daher reicht es aus, wenn das Manipulierimplantat handfest, das heisst ohne bestimmtes Werkzeug aufgeschraubt wird.

Gemäss einem weiteren bevorzugten Ausführungsbeispiel des erfindungsgemässen Verfahrens wird im ersten Schritt das Verlängerungsstück nacheinander folgend zwei Mal in das Implantat eingedreht. Bei neu hergestellten Verlängerungsstücken kann das Gewinde am Gewindezapfen Grate oder andere Unregelmässigkeiten aufweisen. Diese Unregelmässigkeiten werden beim ersten Einschrauben beseitigt. Beim zweiten Einschrauben mit einem genau vorbestimmten Drehmoment herrschen dann die gleichen Bedingungen wie beim nachfolgenden Einschrauben des bearbeiteten Verlängerungsstücks mit dem gleichen Drehmoment.

Nachdem das Arbeitsmodell erstellt ist, wird das Verlängerungsstück anschliessend vorteilhaft bearbeitet, insbesondere beschliffen. Dadurch wird eine Basis für das Retentionselement gebildet. Die Bearbeitung des Verlängerungsstücks erfolgt beispielsweise, indem zuerst an dem auf dem Arbeitsmodell befestigten Verlängerungsstück eine Lagemarkierung angebracht wird. Anschliessend kann das Verlängerungsstück zum Bearbeiten vom Arbeitsmodell entfernt werden. Zur Bearbeitung kann das Verlängerungsstück insbesondere auf einen dazu vorgesehenen Halter gesetzt und bearbeitet werden. Es wäre theoretisch aber auch denkbar, das Verlängerungsstück direkt auf dem Arbeitsmodell zu bearbeiten.

Ausserdem wird bevorzugt auf das bearbeitete Verlängerungsstück ein Retentionselement zum Halten eines abnehmbaren Zahnersatzes aufgebracht. Das Retentionselement kann beispielsweise durch Löten, Lasern oder Angiessen befestigt werden. Es wären aber auch andere Befestigungen denkbar. Dabei ist es denkbar, dass das Retentionselement unmittelbar nach der Bearbeitung des Verlängerungsstücks auf das Verlängerungsstück aufgebracht wird. Es ist aber auch denkbar, dass das Verlängerungsstück nur vorbereitet wird und dass das Retentionselement zu einem späteren Zeitpunkt durch einem anderen Anwender aufgebracht wird.

Damit sichergestellt ist, dass das bearbeitete Verlängerungsstück sich in der genau gleichen Position im Implantat befindet, wie während der Abdrucknahme, wird das bearbeitete Verlängerungsstück nach Fertigstellung mit dem gleichen, ersten, vorbestimmten Drehmoment in das Implantat eingedreht wie vor der Abdrucknahme. Die genaue Definition des fest eingeschraubten Verlängerungsstücks bezogen auf das Implantat kann ausserdem durch das Vorsehen einer wie oben beschriebenen Schulter erhöht werden, welche bei aufgesetztem Verlängerungsstück an der Implantatschulter zur Anlage gelangt.

Gemäss einem weiteren bevorzugten Ausführungsbeispiel des erfindungsgemässen Verfahrens wird beim definitiven Eindrehen des Verlängerungsstücks in das Implantat zwischen einem an sich bekannten Innenkonus des Implantates und dem Verlängerungsstück ein Spreizkonus eingesetzt. Mit dem Spreizkonus kann insbesondere die Querstabilität des Verlängerungsstücks auf dem Implantat erhöht werden. Die kraftschlüssige Verbindung über die Implantatschulter und den Konus führt zu einer optimalen Verteilung der Kräfte.

Die Erfindung wird nachfolgend an Hand der Zeichnungen und in Ausführungsbeispielen näher erläutert. Es zeigen:
- Figur 1:: eine perspektivische Darstellung eines an sich bekannten Implantats in einem Teilschnitt,
- Figur 2a:: eine perspektivische Darstellung eines erfindungsgemässen Verlängerungsstücks von oben gesehen,
- Figur 2b:: eine perspektivische Darstellung des erfindungsgemässen Verlängerungsstücks von unten gesehen,
- Figur 3a:: eine perspektivische Darstellung eines Eindrehwerkzeugs zum Eindrehen des Verlängerungsstücks in ein Implantat/Manipulierimplantat,
- Figur 3b:: eine weitere perspektivische Darstellung des Eindrehwerkzeugs gemäss Figur 3a,
- Figur 4a:: eine perspektivische Darstellung einer erfindungsgemässen Übertragungshilfe,
- Figur 4b:: eine weitere perspektivische Darstellung der Übertragungshilfe gemäss Figur 4a,
- Figur 5:: eine perspektivische Darstellung eines Manipulierimplantates,
- Figur 6:: eine perspektivische Darstellung eines Halters zum Halten des Verlängerungsstücks,
- Figur 7:: eine perspektivische Darstellung eines Retentionselementes,
- Figur 8:: eine perspektivische Darstellung eines Spreizkonus,
- Figur 9a-20c:: den prinzipiellen Verfahrensablauf enthaltend Abdrucknahme, Bearbeitung des Verlängerungsstücks, Aufsetzen einer Retentionsbasis und Befestigung des Verlängerungsstücks auf dem Implantat, wobei die einzelnen Figuren zeigen:

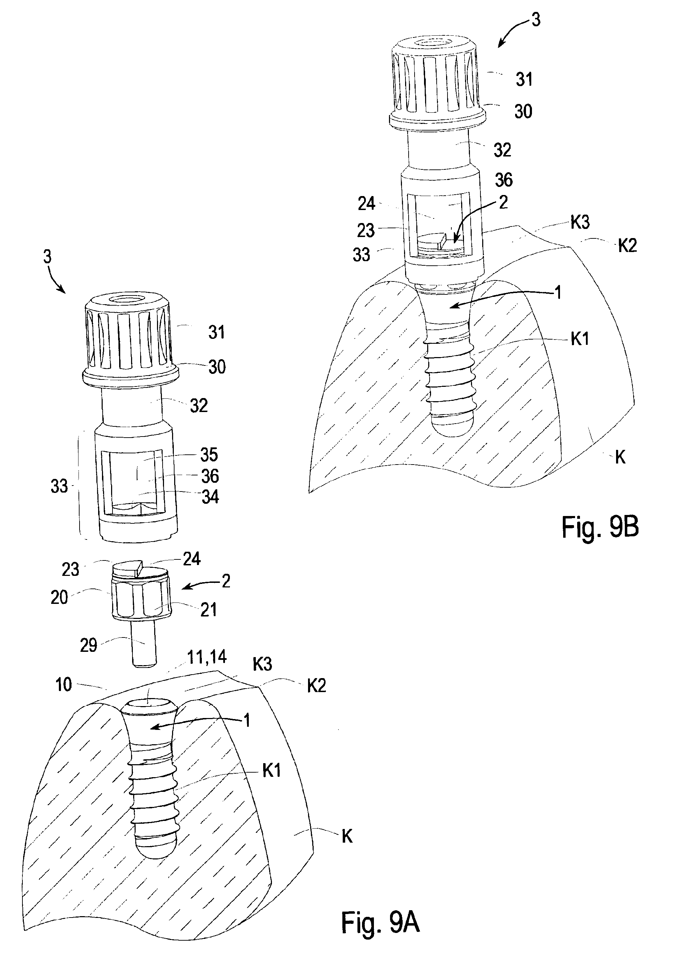

- Figur 9a:: Einschrauben des Verlängerungsstücks in ein Implantat,
- Figur 9b:: in das Implantat eingeschraubtes Verlängerungsstück,

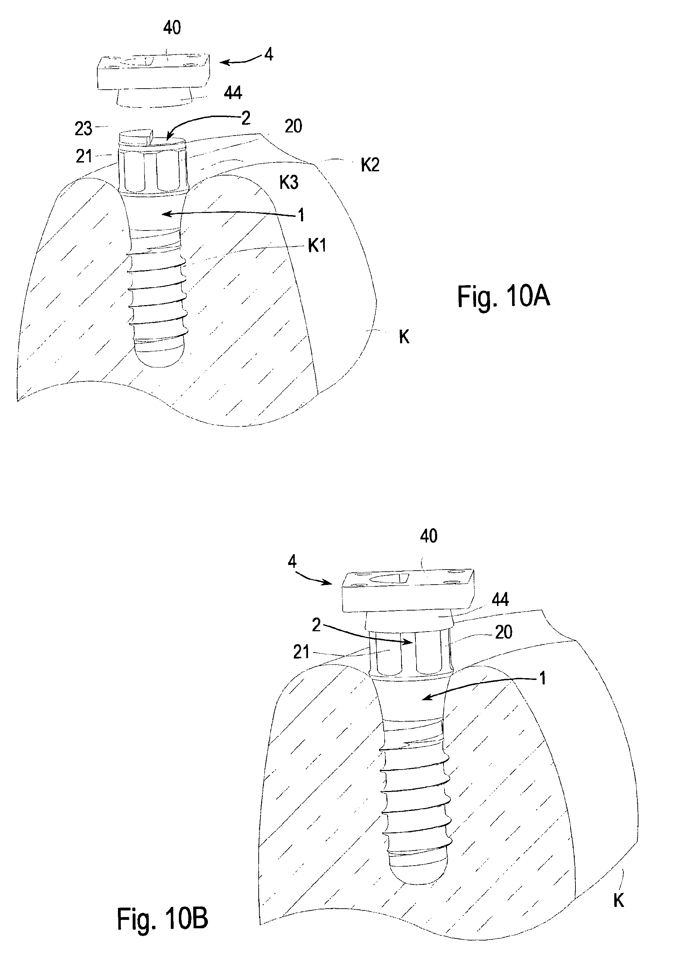

- Figur 10a:: Aufsetzen einer Übertragungshilfe auf ein Verlängerungsstück,
- Figur 10b:: auf das Verlängerungsstück aufgesetzte Übertragungshilfe,

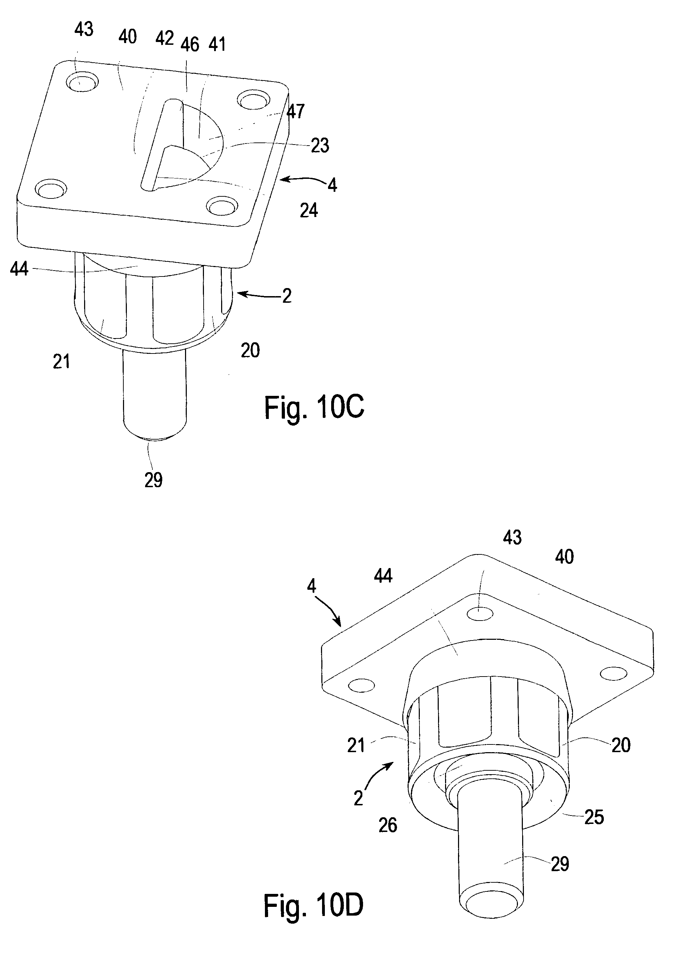

- Figur 10c-e:: verschiedene perspektivische Darstellungen der Verbindung zwischen der Übertragungshilfe und dem Verlängerungsstück,

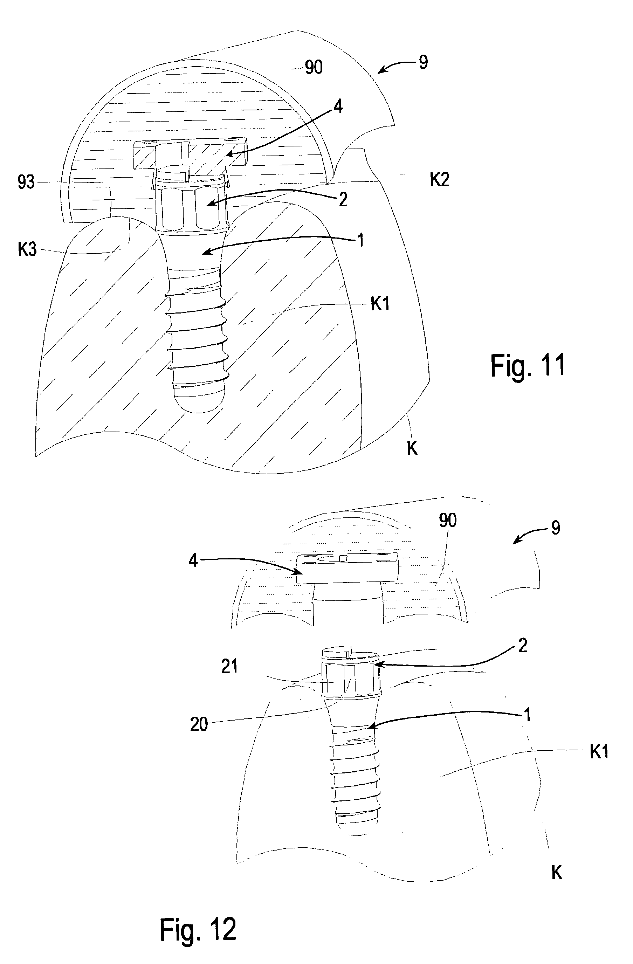

- Figur 11:: Abdrucknahme des Implantates und des darin eingeschraubten Verlängerungsstücks,
- Figur 12:: Entfernung des Abdrucks vom Implantat und von dem Verlängerungsstück,

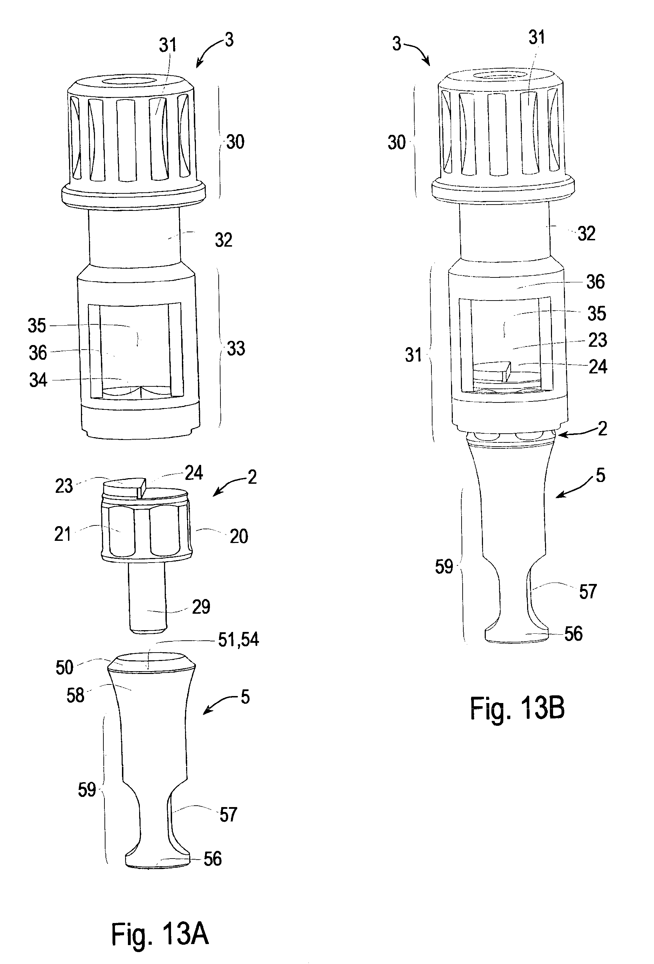

- Figur 13a:: Eindrehen des Verlängerungsstücks in ein Manipulierimplantat,
- Figur 13b:: in das Manipulierimplantat eingedrehtes Verlängerungsstück,

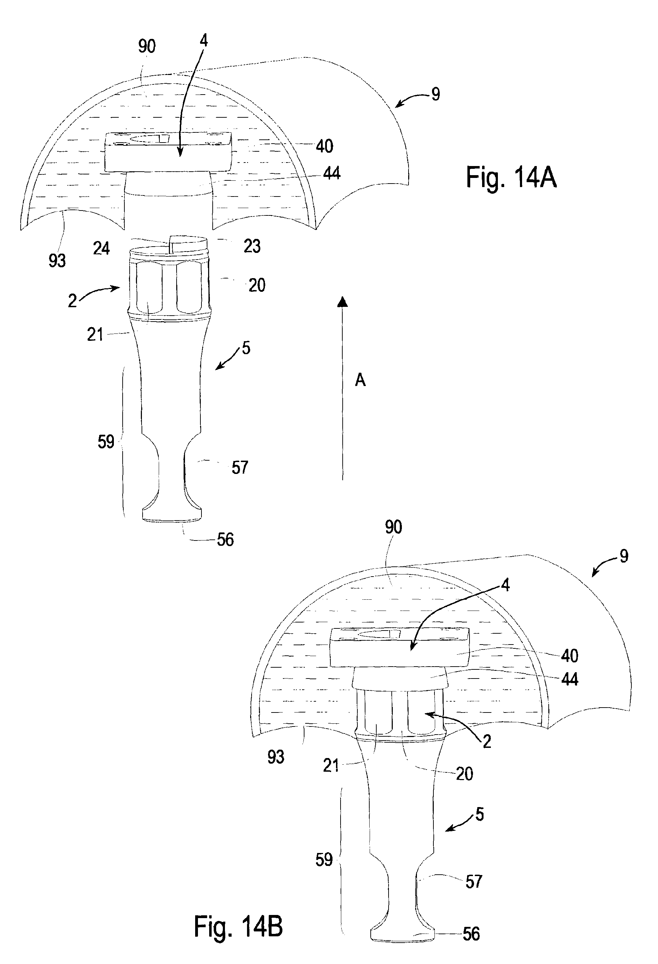

- Figur 14a:: Repositionieren des Verlängerungsstücks mit dem Manipulierimplantat in den Abdruck,
- Figur 14b:: im Abdruck repositioniertes Verlängerungsstück mit Manipulierimplantat,

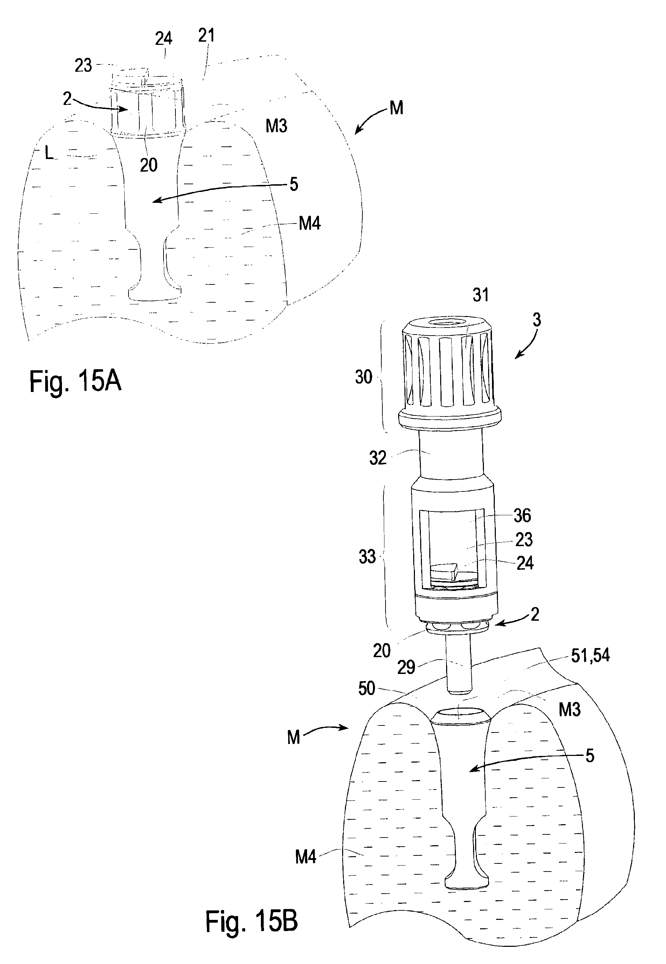

- Figur 15a:: perspektivische Darstellung eines Arbeitsmodells mit eingebettetem Manipulierimplantat mit dem Verlängerungsstück zum Anbringen einer Lagemarkierung,
- Figur 15b:: Entfernen des Verlängerungsstücks aus dem Manipulierimplantat,

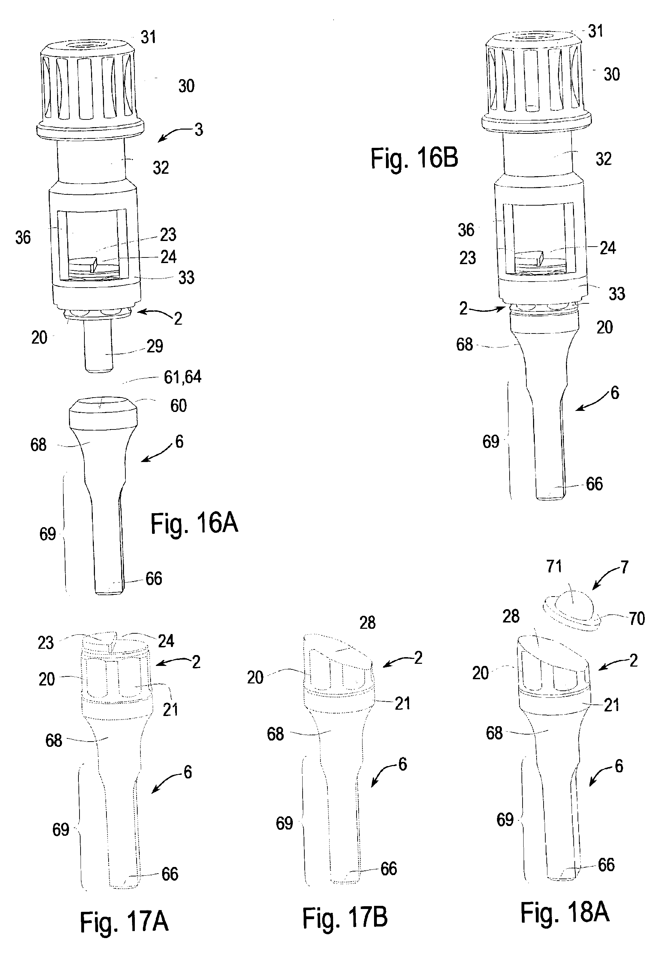

- Figur 16a:: Einschrauben des Verlängerungsstücks auf einen Halter,

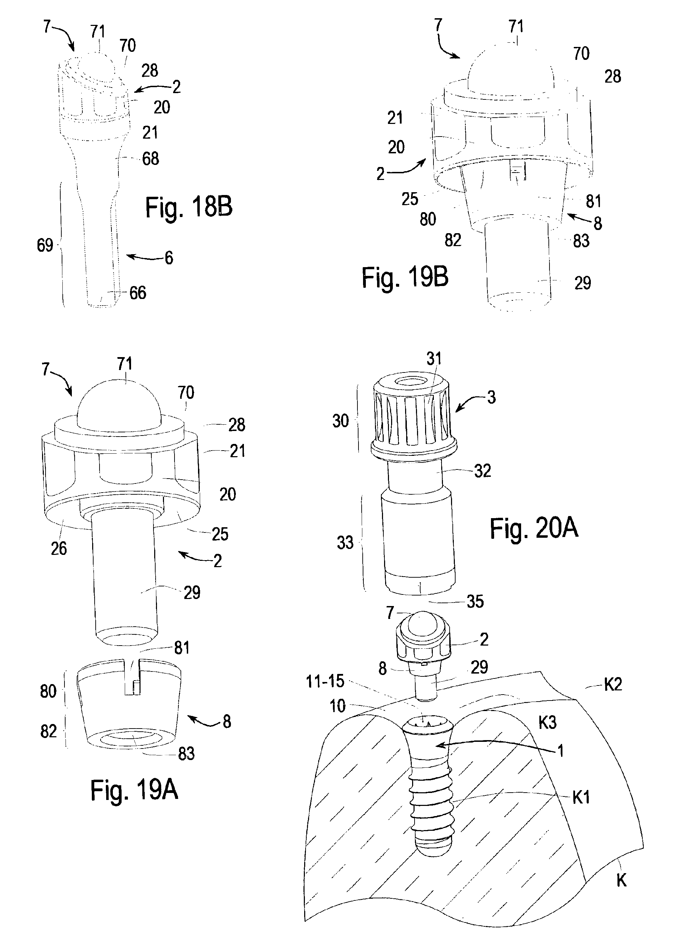

- Figur 16b:: auf den Halter eingeschraubtes Verlängerungsstück,
- Figur 17a: Verlängerungsstück mit Halter
- Fiur 17b:: Bearbeitetes Verlängerungsstück mit Halter
- Figur 18a+b:: Befestigung eines Retentionselements,
- Figur 19a:: Aufsetzen eines Spreizkonus auf dem Gewindezapfen des Verlängerungsstücks,
- Figur 19b:: Verlängerungsstück mit aufgesetztem Spreizkonus und befestigtem Retentionselement,

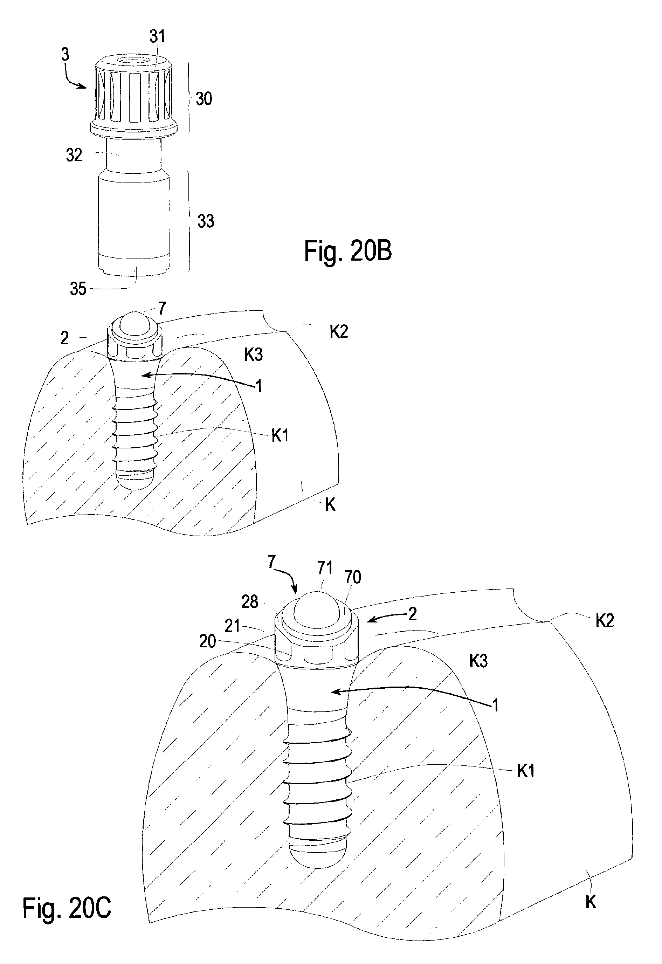

- Figur 20a-c:: Einschrauben des fertiggestellten Verlängerungsstücks in das Implantat.

Im folgenden bezeichnen gleiche Bezugsziffern jeweils gleiche Teile. Sind in einer Zeichnung Bezugsziffern enthalten, im unmittelbar zugehörigen Beschreibungstext jedoch nicht erläutert, wird auf deren Erwähnung in vorangehenden Figurenbeschreibungen Bezug genommen. Auf die wiederholte Bezeichnung von Bauteilen nachfolgender Figuren wird verzichtet, sofern zeichnerisch erkennbar ist, dass es sich um bereits beschriebene Bauteile handelt.

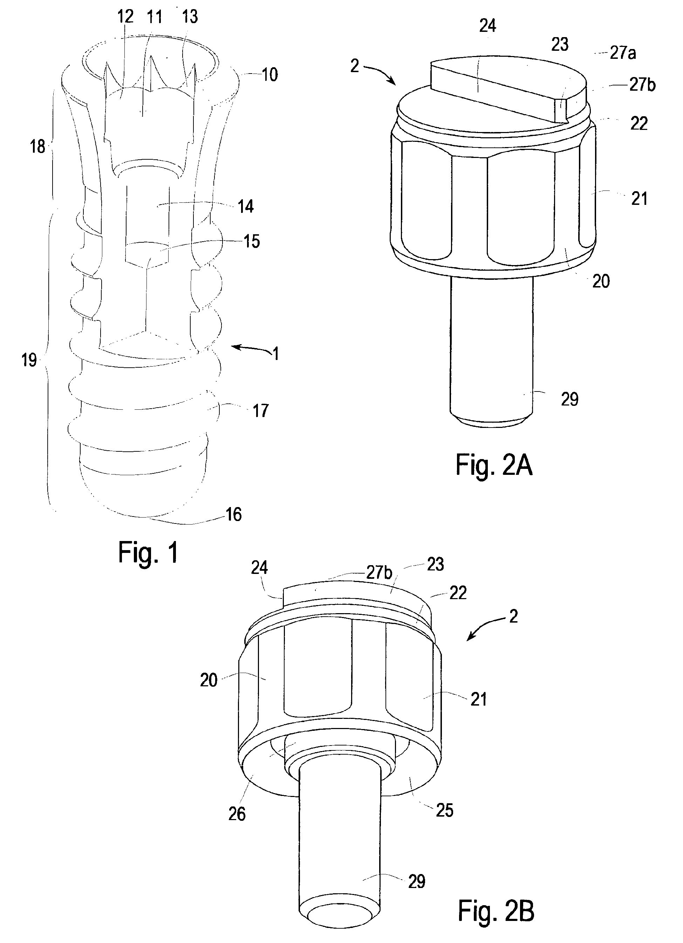

Figur 1 zeigt ein an sich bekanntes Implantat 1, welches als Vollschraubenimplantat ausgebildet ist. Das Implantat 1 weist einen Schaftteil 19 mit einer Implantatspitze 16 und einen Implantatkopf 18 auf. Der Schaftteil 19 ist zum Einschrauben in einen Kieferknochen bestimmt. Der Implantatkopf 18 steht zumindest teilweise aus dem Kieferknochen hervor. Der Schaftteil 19 ist mit einem Aussengewinde 17 versehen. Der Implantatkopf endet in bekannter Weise mit einer geneigten Implantatschulter 10. Am Implantatkopf 18 mündet ein sich über die Höhe des Implantatkopfs 18 erstreckendes Sackloch 11. Das Sackloch 11 weist einen Innenkonus 12 und einen oberhalb des Innenkonus 12 angeordneten Innenvielkant 13 auf. Der Innenvielkant 13 dient bei Standardanwendung des Implantats 1 zur Definition der Lage des Implantats 1 in Umfangsrichtung. Unterhalb des Innenkonus 12 ist ein Innengewinde 14 angeordnet, in welches ein Verlängerungsstück eingeschraubt werden kann. Die Öffnung im Implantat wird durch einen Bohrungsgrund 15 definiert.

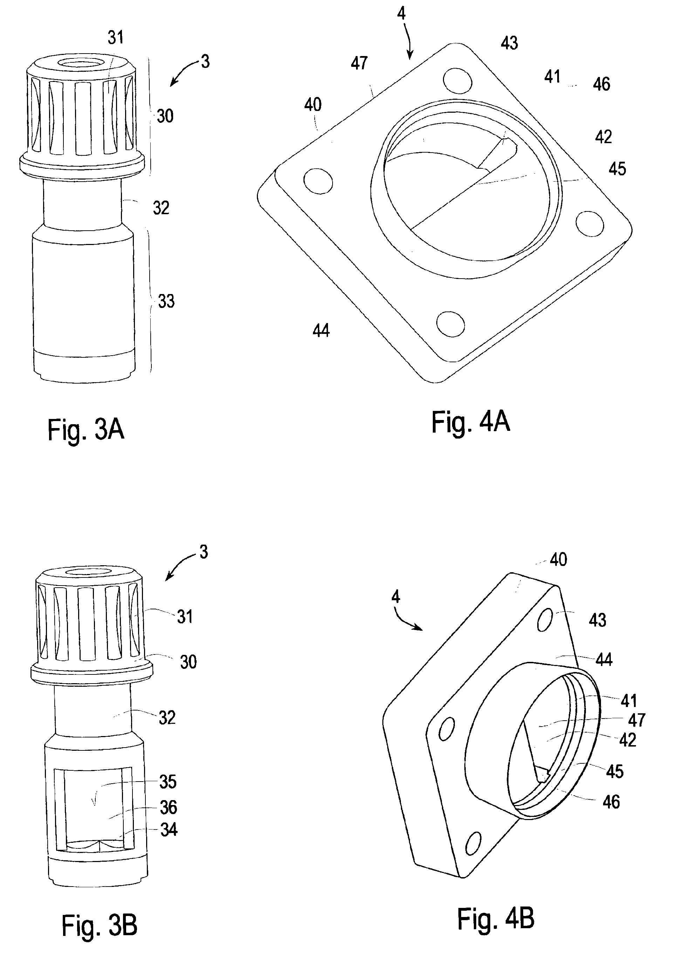

Figur 2a zeigt in perspektivischer Darstellung ein erfindungsgemässes Verlängerungsstück 2. Das Verlängerungsstück 2 besteht im wesentlichen aus einem Kopfteil 20 und einem an einem Ende des Kopfteil 20 angebrachten Gewindezapfen 29. Das Gewinde des Gewindezapfens 29 ist aus Gründen der Übersichtlichkeit nicht dargestellt. Das Kopfteil 20 weist mehrere, polygonal angeordnete Eindrehflächen 21 auf. Mit den Eindrehflächen 21 lässt sich das Verlängerungsstück 2 mit einem geeigneten Werkzeug festschrauben. Am Kopfteil 2 ist eine erste Kontur 22 in der Form einer umlaufenden Nut vorgesehen. Die erste Kontur dient zum Eingriff mit einer entsprechend geformten zweiten Kontur 45 an einer Übertragungshilfe (siehe Figuren 4a und 4b).

Das dem Gewindezapfen 29 gegenüberliegende Ende des Kopfteils 20 ist als halbkreisförmiger Zylinderabschnitt 23 ausgebildet. Der Zylinderabschnitt 23 weist eine Referenzfläche 24 auf, die im wesentlichen diagonal verläuft. Die Referenzfläche 24 dient zur Definition der Position des Verlängerungsstücks während einer Abdrucknahme (siehe Erläuterungen in Figuren 10a und 10b).

Am halbkreisförmigen Zylinderabschnitt 23 ist im Übergangsbereich zwischen der Referenzfläche 24 und der halbzylindrischen Aussenfläche 27b des Zylinderabschnitts 23 ist eine Abschrägung 27a vorgesehen.

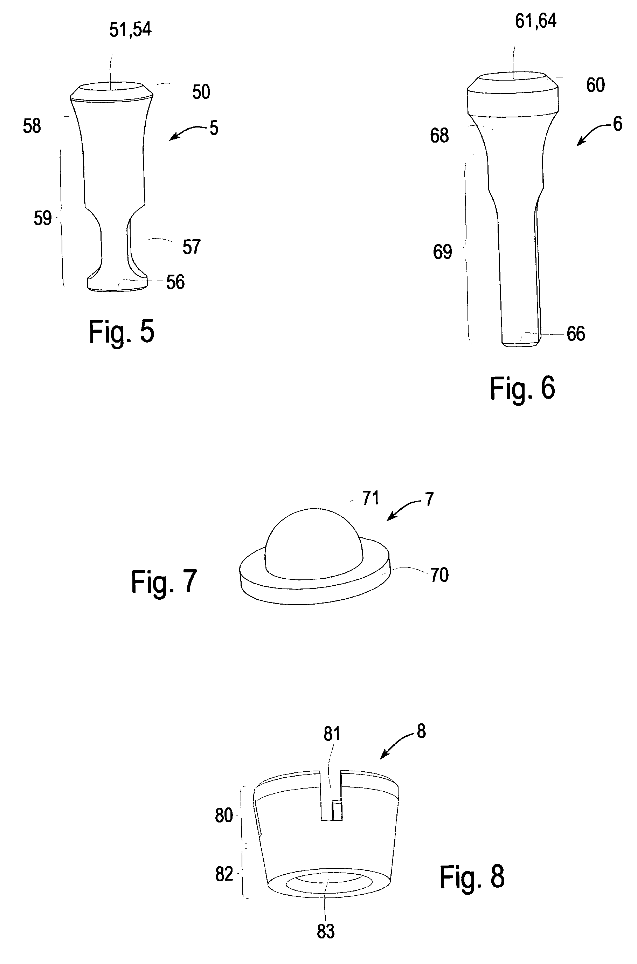

In Figur 2b ist das Verlängerungsstück 2 von unten her gezeigt. An der zum Kontakt mit dem Implantat bestimmten Seite weist das Verlängerungsstück 2 eine Gegenschulter 25 auf, die bei aufgesetztem Verlängerungsstück mit der Implantatschulter 10 in Kontakt ist. Die Neigung der Gegenschulter 25 ist entsprechend der Neigung der Implantatschulter 10 gewählt und beträgt typischerweise 45°. Der Gewindezapfen 29 ist ausserdem mit einer Verdikkung 26 verbunden, die zum Kontakt mit einem Spreizkonus (siehe Figur 8) dient.

Figur 3a zeigt ein zum Eindrehen des Verlängerungsstücks 2 geeignetes Eindrehwerkzeug 3. Das Eindrehwerkzeug 3 weist einen Kopf 30 mit einer Mitnehmerkontur 31 auf. Die Mitnehmerkontur 31 ist als Riffelung ausgebildet. Ein Drehmomentwerkzeug kann in die Mitnehmerkontur 31 eingreifen. Das Eindrehwerkzeug weist ausserdem einen Halsteil 32 und einen Schaftteil 33 auf. Im Schaftteil 33 ist (siehe Figur 3b) eine Innenkontur 34 vorgesehen, welche den Eindrehflächen 21 des Verlängerungsstücks 2 entspricht. Die Innenkontur 34 ist Teil einer Kavität 35 zur Aufnahme des Kopfteils 20. Im Schaftteil 33 ist eine Öffnung 36 vorgesehen. Die Öffnung 36 erlaubt das Aufsetzen des Eindrehwerkzeugs auf ein Verlängerungsstück mit daran befestigtem Retentionselement (siehe beispielsweise Figur 20a), auch wenn das Retentionselement und/oder die Retentionsbasis teilweise einen Umfang aufweist, der grösser ist als der freie Innendurchmesser des Eindrehwerkzeugs 3.

Figuren 4a und 4b zeigen in perspektivischer Darstellung eine erfindungsgemässe Übertragungshilfe 4. Die Übertragungshilfe 4 besteht im wesentlichen aus einer Sockelplatte 40, an welcher eine zirkuläre Lippe 44 angebracht ist. In der Sockelplatte 40 ist eine Öffnung 41 angeordnet. Die Öffnung 41 dient zur Aufnahme des halbkreisförmigen Zylinderabschnitts 23 eines Verlängerungsstücks 2. Die Öffnung 41 wird durch eine im wesentlichen diagonal verlaufende Transferfläche 42 und durch eine halbzylindrische Innenwand 47 begrenzt. Eine Ergänzung im Übergangsbereich zwischen der halbzylindrischen Innenfläche 47 und der Transferfläche 42 ist ausserdem eine Aussparung 46 vorgesehen. Die Aussparung 46 schafft im Bereich des Übergangs ausreichend Platz, damit die Übertragungshilfe einfach auf ein passendes Verlängerungsstück aufgesetzt werden kann.

In der Sockelplatte 40 sind ausserdem Löcher 43 angeordnet. Die Löcher 43 dienen zum Befestigen eines Fadens als Aspirationssicherung. Auf der Innenseite der zirkulären Lippe 44 ist ausserdem eine zweite Kontur in der Form eines radialen Wulstes gebildet. Der radiale Wulst dient zum Eingriff mit der ersten Kontur 22 am Verlängerungsstück 2.

Die Übertragungshilfe ist aus einem Kunststoffmaterial, beispielsweise PEEK, POM. Das Verlängerungsstück 2 ist aus einer metallischen nicht oxidierenden, hochschmelzenden Legierung hergestellt, typischerweise mit 60% Ad, 19% Pt, 20% Pd, 1% Ir. Der Schmelzbereich dieser Legierung liegt zwischen 1400° und 1490° Celsius.

Figur 5 zeigt ein Manipulierimplantat 5, mittels welchem das Verlängerungsstück 2 in einem Arbeitsmodell positioniert werden kann. Das Manipulierimplantat 5 ist ähnlich wie das Implantat 2 ausgebildet und weist einen Schaftteil 59 mit einem Fuss 56 sowie einem Kopf 58 mit einer Schulter 50 auf. Im Kopf 58 ist ein Sackloch 51 und ein Innengewinde 54 angebracht. Das Schaftteil 59 ist mit einer nicht 100% rotationssymmetrischen Aussenkontur 57 versehen, welche eine Verdrehung des Manipulierimplantates verhindern soll.

In Figur 6 ist ein Halter 6 zum Halten und Bearbeiten des Verlängerungsstücks 2 gezeigt. Der Halter ist ebenfalls im Wesentlichen ähnlich wie ein Implantat 2 aufgebaut und weist insbesondere eine Schulter 60 und ein Sackloch 61 mit einem Innengewinde 64 auf. Der Halter 6 weist einen Schaftteil 69 auf, an welchem der Halter gehalten und/oder befestigt werden kann. Der Schaftteil 69 endet in einem Fuss 66. Der Schaftteil 69 weitet sich im Bereich eines Kopfs 68 gegen die Schulter 60 hin aus.

Figur 7 zeigt ein Beispiel eines Retentionselements 7. Das Retentionselement 7 besteht aus einer Scheibe 70, auf welcher ein Kopf 71 angeordnet ist. Der Kopf 71 dient zur Aufnahme eines Zahnersatzes.

In Figur 8 ist ein Spreizkonus 8 gezeigt. Der Spreizkonus weist ein Kopfteil 80 auf. Im Kopfteil 80 ist ein Dehnungsschlitz 81 angeordnet. Unterhalb des Kopfteils 80 erstreckt sich ein konischer Wandteil 83 auf dessen Innenseite ein Gewinde angeordnet ist. Der Spreizkonus 8 weist einen in Achsrichtung durchgehenden Durchgang 83 auf, durch welchen der Gewindezapfen 29 des Verlängerungsstücks 2 hindurchgeführt werden kann.

Figur 9a zeigt ein Implantat 1, welches in einem Loch K1 im Kieferknochen K eines Patienten eingesetzt und eingeheilt ist. Der Knochen K weist einen Knochenkamm K2 auf, welcher eine Umgebungskontur K3 im Bereich des Implantats 1 definiert. In Figur 9a ist das Eindrehwerkzeug 3, das Implantat 1 und das Verlängerungsstück 2 einzeln dargestellt. Gemäss der Darstellung in Figur 9b wird das Verlängerungsstück 2 in einem ersten Schnitt mit dem Eindrehwerkzeug 3 in das Implantat 1 eingedreht. Dazu kann auf das Eindrehwerkzeug 3 ein Drehmomentaufsatz in an sich bekannter Weise aufgesetzt werden, so dass sich das Verlängerungsstück 2 mit einem genau definierten Drehmoment (typischerweise 35Ncm) eingedreht werden kann. Nach dem ersten Eindrehen wird das Verlängerungsstück 2 gelöst und ein zweites Mal mit dem gleichen Drehmoment eingedreht. Damit wird eine nicht genau definierte Endstellung des Verlängerungsstücks 2 im Implantat auf Grund von Graten oder Unregelmässigkeiten am Gewinde vermieden. Wenn das Verlängerungsstück 2 fest auf dem Implantat 1 aufgesetzt ist, wird das Eindrehwerkzeug 3 entfernt (siehe Figur 9b).

Gemäss Figur 10a wird die Übertragungshilfe 4 so auf das Verlängerungsstück 2 gesetzt, dass der halbkreisförmige Zylinderabschnitt 23 am Verlängerungsstück 2 in die halbkreiszylinderförmige Öffnung 41 eingreift.

Die Übertragungshilfe 40 schnappt mittels der zweiten Kontur 45 in der ersten Kontur 22 des Verlängerungsstücks 2 ein und wird darauf festgehalten.

Figur 10b zeigt die Übertragungshilfe 4 in der aufgesetzten Lage.

In Figuren 10c und 10d ist die auf dem Verlängerungsstück 2 aufgeschnappte Übertragungshilfe 4 im Detail gezeigt. Durch Eingriff zwischen dem Halbzylinderabschnitt 23 mit der Öffnung 41 wird die Lage des Verlängerungsstücks 2 bezogen auf die Umfangsrichtung auf die Übertragungshilfe 4 übergeben. Auf Grund der Abschrägung 27a am Verlängerungsstück und der Aussparung 46 an der Übertragungshilfe lässt sich die Übertragungshilfe einfach auf das Verlängerungsstück aufsetzen. Durch Kontakt zwischen der Transferfläche 42 und der Referenzfläche 24 einerseits und der halbzylindrischen Innenfläche 47 der Übertragsungshilfe 4 und der halbzylindrischen Aussenfläche 27b des Verlängerungsstücks 2 ist die Umfangsposition der Übertragungshilfe bezogen auf das Verlängerungsstück genau definiert. Die zirkuläre Lippe 44 der Übertragungshilfe 4 umfasst im wesentlichen den oberen Abschnitt des Kopfteils 20 des Verlängerungsstücks 2.

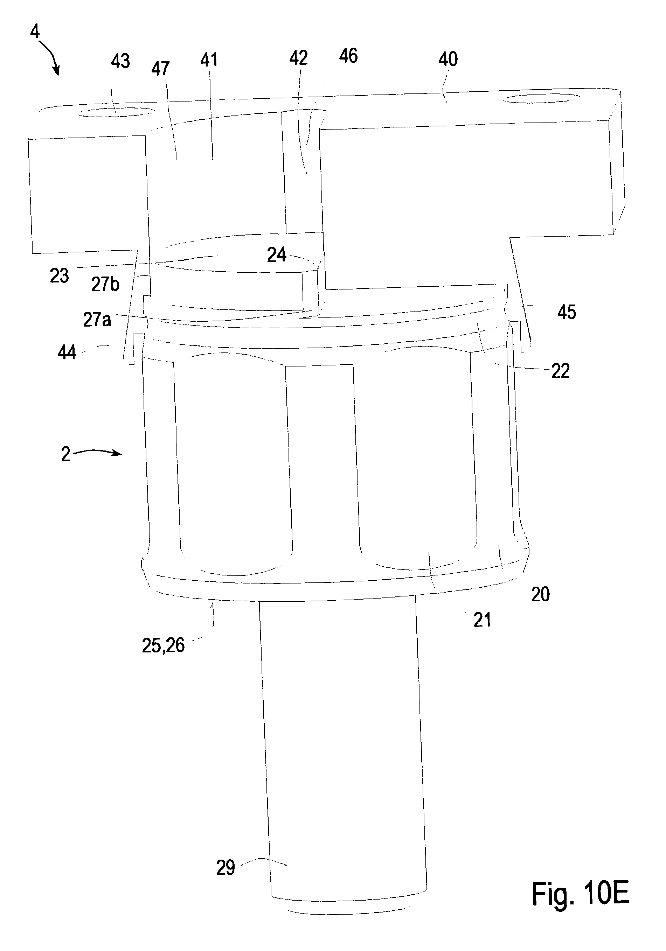

In Figur 10e ist der Eingriff zwischen dem Verlängerungsstück 2 und der Übertragungshilfe 4 im Detail und im Schnitt gezeigt. Die zweite Kontur 45 ist durch einen radialen Wulst gebildet. Der Wulst schnappt in die als Nut ausgebildete erste Kontur 22 des Verlängerungsstücks 2 ein. Der halbkreisförmige Zylinderabschnitt 23 liegt in der Öffnung 41, so dass die Referenzfläche 24 des Verlängerungsstücks an der Transferfläche 42 der Übertragungshilfe 4 anliegt.

Zur Vornahme eines Abdrucks wird Abdruckmasse 90 in einem Abdrucklöffel 9 über die Situation im Mund mit dem Implantat 1 und dem darauf aufgesetzten Verlängerungsstück 2 mit der Übertragungshilfe 4 gedrückt (siehe Figur 11). Dadurch wird ein Abdruck 93 gebildet. Die elastomere Abdruckmasse ist typischerweise Vinyl-Polysiloxan/Polyäthergummi).

Nach Aushärten der Abdruckmasse 90 wird der Abdruck 93 vom Verlängerungsstück 2 entfernt. Dabei bleibt die Übertragungshilfe 4 insbesondere auf Grund der Sockelplatte 40 in der Abdruckmasse 90 und trennt sich auf Grund der Schnappverbindung während dem Entfernen des Abdrucks 93 vom Verlängerungsstück 2.

Figur 12 zeigt die Entfernung des Abdrucks 9 vom Implantat 1 mit dem aufgesetzten Verlängerungsteil 2. Die Übertragungshilfe 4 verbleibt in der Abdruckmasse 90.

In einem nächsten Schritt wird das Verlängerungsstück 2 mit dem Eindrehwerkzeug 3 aus dem Implantat geschraubt (nicht dargestellt). Anschliessend wird mit dem Eindrehwerkzeug das Verlängerungsstück 2 auf ein Manipulierimplantat (siehe Figur 13a) geschraubt. In Figur 13b ist das auf das Manipulierimplantat 5 aufgeschraubte Verlängerungsstück 2 gezeigt. In einem nächsten Schritt (Figur 14a) wird das Manipulierimplantat 5 mit dem darauf festgeschraubten Verlängerungsstück 2 in dem Abdruck 93 repositioniert. Dazu muss der halbkreisförmige Zylinderabschnitt 23 in die Öffnung 41 der noch im Abdruck enthaltenen Übertragungshilfe 4 eingeführt werden. Damit eine solche Repositionierung möglich ist, muss das Manipulierimplantat 5 mit dem Verlängerungsstück 2 gemäss Figur 14a um 180° um die Achse A des Verlängerungsstücks 2 gedreht werden, so dass sie wie in Figur 14b dargestellt eingesetzt werden kann. In einer alternativen Ausführung ist es auch denkbar, zuerst das Verlängerungsstück 2 zu repositionieren und erst anschliessend das Manipulierimplantat 5 einzuschrauben.

Die Einschraubung des Manipulierimplantates erfolgt mit einem verhältnismässig geringem Drehmoment ohne Drehmoment Werkzeug. Typischerweise wird das Manipulierimplantat ohne Werkzeug handfest festgeschraubt.

In Figur 14b ist der Abdruck eines einzigen Verlängerungsstücks 2 mit einem Manipulierimplantat 5 gezeigt. Selbstverständlich erfolgt in einem Abdruck die Abdrucknahme aller Verlängerungsstücke 2 auf allen vorhandenen Implantaten 1 oder Pfeilern. Zur Vereinfachung ist nur ein Implantat/Manipulierimplantat 5 mit einem Verlängerungsstück 2 gezeigt. Ausgehend von dem Abdruck 93 mit den darin befestigten Manipulierimplantaten 5 (siehe Figur 14b) wird durch Eingiessen der Manipulierimplantate 5 in eine Modellmasse M4 ein Arbeitsmodell M erzeugt. Im Arbeitsmodell M (siehe Figur 15a) sind die Köpfe 58 der Manipulierimplantate 5 gleich angeordnet wie die Köpfe 18 der Implantate 1 im Mund des Patienten. Das Arbeitsmodell M gibt eine Positivkontur M3 wieder, die der Umgebungskontur K3 im Kieferbereich des Patienten entspricht. Auf Grund der Übertragung der Verlängerungsstücke 2 mit dem Abdruck 93 und der Übertragungshilfe 4 entspricht die Lage der Verlängerungsstücke 2 im Arbeitsmodell M genau der Lage der Verlängerungsstücke 2, welche mit dem vorbestimmten ersten Drehmoment, typischerweise 35Ncm auf dem Implantat 1 festgeschraubt worden sind. Damit dies gewährleistet ist, ist es wesentlich, dass im Repositionierungsschritt gemäss Figur 14a jedes einzelne Verlängerungsstück 2 an die richtige Stelle repositioniert wird, das heisst, dass nicht zwei Verlängerungsstücke miteinander vertauscht werden.

Auf dem Arbeitsmodell M wird in einem nächsten Schritt eine Lagemarkierung L angebracht. Die Lagemarkierung L definiert die Form, zu welcher das Verlängerungsstück 2 bearbeitet werden soll. Die Lagemarkierung L wird auf jedem einzelnen Verlängerungsstück 2 individuell gewählt, so dass der nachfolgende Aufbau ein Aufschieben eines Zahnersatzes in einer genau definierten Aufschieberichtung erlaubt. Nachdem die Lagemarkierungen L auf allen Verlängerungsstücken 2 angebracht worden sind, werden die Verlängerungsstücke wie in Figur 15b gezeigt mit dem Eindrehwerkzeug 3 aus dem Arbeitsmodell M entfernt. Anschliessend wird wie in Figuren 16a und 16b gezeigt, das Verlängerungsstück 2 (bzw. die Verlängerungsstücke 2) auf Halter 6 aufgeschraubt. Der Halter 6 dient zum genauen Halten der Verlängerungsstücke 2 in einem Bearbeitungsvorgang. Mit dem Halter 6 lässt sich das Gewinde des Verlängerungsstücks aber auch die Finger schützen. Es ergeben sich auch bessere Haltemöglichkeiten beim Bearbeiten des Verlängerungsstückes.

Das auf dem Halter 6 aufgesetzte Verlängerungsstück 2 (siehe Figur 17a) wird anschliessend entlang der Lagemarkierung L beschliffen, so dass eine vordefinierte, geneigte Plateaufläche 28 gebildet wird (siehe Figur 17b). Auf die geneigte Plateaufläche 28 wird in einem nächsten Schritt (siehe Fig. 18a) ein Retentionselement befestigt, beispielsweise durch Löten, Lasern oder Angiessen.

Figur 18b zeigt das Verlängerungsstück 2 mit auf der Plateaufläche 28 befestigtem Retentionselement 70. Das Verlängerungsstück 2 wird nun vom Halter 6 entfernt und ist bereit (siehe Figur 19a) zur definitiven Befestigung im Implantat 1 im Mund des Patienten. Vor der Befestigung wird der Spreizkonus 8 mit dem Durchgang 83 über dem Gewindezapfen 29 geführt, so dass er mit der Innenfläche an der Verdickung 26 benachbart zum Kopfteil 20 des bearbeiteten Verlängerungsstücks 2 anliegt (siehe Figur 19a und 19b). Das auf diese Weise mit dem Spreizkonus 8 versehene Verlängerungsstück 2 wird gemäss Figur 20a in das Implantat 1 im Mund des Patienten eingeschraubt. Zum Einschrauben wird wiederum das Eindrehwerkzeug 3 verwendet, welches mit einem geeigneten Drehmomentaufsatz versehen ist. Die Einschraubung des Verlängerungsstücks 2 erfolgt mit dem ersten, vordefinierten Drehmoment, typischerweise mit 35Ncm. Damit ist sichergestellt, dass die Position des bearbeiteten Verlängerungsstücks 2 im Implantat 1 genau der Position während der Abdrucknahme entspricht. In Figur 20c ist die Situation im Mund nach dem Aufsetzen des Verlängerungsstücks gezeigt. Auf Grund der individuellen Bearbeitung der geneigten Plateauflächen 28 jedes einzelnen Verlängerungsstücks 2 können allfällige Disparallelitäten der Implantate ausgeglichen werden. Die verschieden geneigten Plateauflächen 28 der verschiedenen Verlängerungsstücke 2 liegen in parallelen Ebenen. Dadurch kann ein Zahnersatz in einer einzigen Aufschubrichtung aufgesetzt werden.

## Patentansprüche

1. Verlängerungsstück für ein Dentalimplantat mit einem Kopfteil (20), welcher als Basis für ein Retentionselement (7) dient, und mit einem Gewindezapfen (29), mit welchem das Verlängerungsstück (2) in das Dentalimplantat (1) einschraubbar ist, wobei das Verlängerungsstück (2) wenigstens eine die Umfangslage des Verlängerungsstücks (2) definierende Referenzform (27b, 24) aufweist, mittels welcher die Umfangslage des Verlängerungsstücks (2) auf ein Arbeitsmodell (M) übertragbar ist, **dadurch gekennzeichnet, dass** das Verlängerungsstück (2) zwischen der Referenzform (27b, 24) und dem Gewindezapfen (29) eine nicht zylindrische Aussenkontur mit Eindrehflächen (21) aufweist, mittels welchen das Verlängerungsstück (2) mit einem daran angreifenden Werkzeug (3) in das Dentalimplantat (1) einschraubbar ist.

2. Verlängerungsstück nach Anspruch 1, **gekennzeichnet durch** eine Gegenschulter (25), mittels welcher das Verlängerungsstück (2) auf einer Implantatschulter (10) des Dentalimplantates abstützbar ist, wodurch die Lage des Verlängerungsstückes in Achsrichtung übertragbar ist.

3. Verlängerungsstück nach Anspruch 1 oder 2, **dadurch gekennzeichnet, dass** der Kopfteil (20) im wesentlichen zylindrisch ausgebildet ist und an seinem oberen Ende eine Referenzfläche (24) der Referenzform aufweist, welche durch eine parallel zur Schraubachse (A) des Verlängerungsstücks (2) verlaufende Schnittfläche eines Halbkreiszylinders (23) gebildet ist.

4. Verlängerungsstück nach Anspruch 3, **dadurch gekennzeichnet, dass** im Bereich des Übergangs von der Referenzfläche (24) zu der Aussenfläche (27b) des Halbkreiszylinders (23) eine Abschrägung (27a) vorgesehen ist.

5. Verlängerungsstück nach einem der Ansprüche 1 bis 4, **dadurch gekennzeichnet, dass** das Verlängerungsstück aus einer metallischen, nicht oxidierenden, hoch schmelzenden Legierung besteht, insbesondere einer Zusammensetzung 60% Au, 19% Pt, 20% Pd, 1% Ir, wobei der Schmelzbereich zwischen 1400° und 1490° Celsius beträgt.

6. Verlängerungsstück (2) nach einem der Ansprüche 1 bis 5, **gekennzeichnet durch** eine erste Kontur (22), auf welche eine Übertragungshilfe (4) mit einer entsprechend komplementär geformten zweiten Kontur (45) klemm- und/oder aufschnappbar ist, und die erste Kontur (22) zwischen den Eindrehflächen (21) und der Referenzform (27b, 24) angeordnet ist.

7. Übertragungshilfe zur Übertragung der Position eines Dentalimplantats (1) und eines Verlängerungsstücks (2) nach Anspruch 6, auf ein Arbeitsmodell (M), mit einer Transferfläche (42), welche die Umfangsposition der Übertragungshilfe (4) definiert, und einer Klemm- und/oder Schnappmittel (45) bildenden zweiten Kontur (45), mit welcher die Übertragungshilfe (4) am Verlängerungsstück (2) befestigbar ist, wobei die Transferfläche (42) komplementär zu einer Referenzform (27b, 24) am Verlängerungsstück (2) ausgebildet ist, **gekennzeichnet durch** eine Sockelplatte (40), in welcher die Transferfläche (42) ausgebildet ist, wobei die Sockelplatte (40) eine in einem Abdruck (93) verdrehsicher verankerbare Form, insbesondere eine nicht zylindrische Aussenkontur aufweist, und die Klemm- und/oder Schnappmittel **durch** eine von der Sockelplatte (40) abstehende, zirkuläre Lippe (44) gebildet sind, welche die zweite Kontur (45) aufweist, mittels welcher die Übertragungshilfe (4) auf der ersten Kontur (22) des Verlängerungselementes (2) aufschnappund/oder aufklemmbar ist.

8. Übertragungshilfe nach Anspruch 7, **dadurch gekennzeichnet, dass** die Transferfläche (42) Teil einer halbzylindrischen Öffnung (41) in der Sockelplatte (40) ist.

9. Übertragungshilfe nach Anspruch 8, **dadurch gekennzeichnet, dass** sich die Öffnung (41) durch die Sockelplatte (40) hindurch erstreckt.

10. Übertragungshilfe nach Anspruch 8 oder 9, **dadurch gekennzeichnet, dass** im Übergangsbereich zwischen der Transferfläche (42) und der halbzylindrischen Innenfläche (47) eine Aussparung (46) angeordnet ist.

11. Übertragungshilfe (4) nach einem der Ansprüche 7 bis 10, **dadurch gekennzeichnet, dass** die Übertragungshilfe (4) einstückig, vorzugsweise aus einem Kunststoffmaterial gefertigt ist.

12. Übertragungshilfe nach einem der Ansprüche 7 bis 11, **dadurch gekennzeichnet, dass** die Sockelplatte (40) mit Löchern (43) versehen ist, welche radial ausserhalb der zirkulären Lippe (44) angeordnet sind.

13. Verwendung eines bearbeitbaren, insbesondere beschleifbaren Verlängerungsstückes (2) für ein Dentalimplantat (1), nach einem der Ansprüche 1 bis 6, als Übertragungsteil zum Übertragen seiner eigenen Axial- und Umfangsposition auf ein Arbeitsmodell sowie als Basis für ein Retentionselement (7).

14. Kombination einer Übertragungshilfe (4) nach einem der Ansprüche 7 bis 12 und eines Verlängerungsstücks (2) nach einem der Ansprüche 1 bis 6, und vorzugsweise eines Dentalimplantates (1) wobei die Transferfläche (42) an der Übertragungshilfe (4) komplementär zur Referenzfläche (24) des Verlängerungsstücks (2) ausgebildet ist.

15. Verfahren zum Abformen der radialen und axialen Lage wenigstens eines in einen Kieferknochen (K) implantierten Dentalimplantats (1) mit einem darin eingesetzten Verlängerungsstück (2) nach einem den Anspruch 1 bis 6 auf ein Arbeitsmodell (M) und/oder zum Erstellen einer Basis für ein Retentionselement (7) bestehend aus den Schritten
a) Einschrauben des wenigstens einen Verlängerungsstückes (2) nach einem den Anspruch 1 bis 6 mit einer Referenzfläche (24) als Basis für ein Retentionselement (7) in das Dentalimplantat (1) oder die Dentalimplantate (1),
b) Erzeugung eines Abdrucks (93) der Situation des Dentalimplantates (1) und des Verlängerungsstücks (2) im Mund des Patienten durch Aufbringen einer Abdruckmasse (90), wobei nach dem Entfernen der Abdruckmasse (90) aus dem Mund das Verlängerungsstück (2) in der Abdruckmasse einen Abdruck hinerlässt und mit dem Dentalimplantat (1) verbunden bleibt,
**gekennzeichnet durch** Einschrauben des wenigstens einen Verlängerungsstücks mit einem vorbestimmten ersten Drehmoment,
c) Entfernen des Verlängerungsstücks (2) vom Dentalimplantat nach dem Entfernen der Abdruckmasse aus dem Mund,
d) Repositionieren des Verlängerungsstücks (2) in der richtigen Position im Abdruck (93),
e) vor oder nach Schritt d) Aufschrauben eines Manipulierimplantats (5) mit einem zweiten Drehmoment auf das wenigstens eine Verlängerungsstück (2),
f) Erzeugen eines Arbeitsmodells (M) **durch** Eingiessen des oder der Manipulierimplantate (5) in eine Modellmasse (M4).

16. Verfahren nach Anspruch 15, **dadurch gekennzeichnet, dass** vor der Abnahme des Abdrucks (93) des Verlängerungsstücks (2) auf das Verlängerungsstück (2) eine Übertragungshilfe (4) aufgesetzt, insbesondere aufgeklemmt und/oder aufgeschraubt wird, und dass beim Erzeugen des Abdrucks (93) die Übertragungshilfe (4) in der Abdruckmasse (90) verbleibt.

17. Verfahren nach Anspruch 15 oder 16, **dadurch gekennzeichnet, dass** das erste vorbestimmte Drehmoment grösser ist als das zweite Drehmoment, dass insbesondere das erste Drehmoment etwa 35Ncm beträgt und dass das zweite Drehmoment etwa einem handfesten Einschrauben des Verlängerungsstücks (2) auf das Manipulierimplantat (5) entspricht.

18. Verfahren nach einem der Ansprüche 15 bis 17, **dadurch gekennzeichnet, dass** in Schritt a) das Verlängerungsstück (2) nacheinanderfolgend zwei Mal in das Dentalimplantat (1) eingedreht wird.

19. Verfahren nach einem der Ansprüche 15 bis 18, **dadurch gekennzeichnet, dass** das Verlängerungsstück (2) nach der Abdrucknahme bearbeitet, insbesondere beschliffen wird.

20. Verfahren nach Anspruch 19, **dadurch gekennzeichnet, dass** an dem Verlängerungsstück (2) vor dem Bearbeiten eine Lagemarkierung (L) angebracht wird und dass das Verlängerungsstück (2) zum Bearbeiten vom Arbeitsmodell (M) entfernt und insbesondere auf einen Halter (6) gesetzt und darauf bearbeitet wird.

21. Verfahren nach Anspruch 19 oder 20, **dadurch gekennzeichnet, dass** beim Bearbeiten des Verlängerungsstücks (2) eine Plateaufläche (28) gebildet wird, auf welche ein Retentionselement (7) zur Halterung eines abnehmbaren Zahnersatzes aufgebracht wird.

22. Verfahren nach Anspruch 21, **dadurch gekennzeichnet, dass** das bearbeitete Verlängerungsstück (2) mit dem ersten vorbestimmten Drehmoment in das Dentalimplantat (1) eingeschraubt wird.

23. Verfahren nach Anspruch 21 oder 22, **dadurch gekennzeichnet, dass** beim definitiven Einschrauben des bearbeiteten Verlängerungsstückes (2) in das Dentalimplantat (1) zwischen einem Innenkonus (12) des Dentalimplantates (1) und dem Verlängerungsstück (2) ein Spreizkonus (8) eingesetzt wird.

## Claims

1. Extension piece for a dental implant with a head part (20) which serves as a basis for a retention element (7), and with a threaded stem (29) with which the extension piece (2) can be screwed into the dental implant (1), the extension piece (2) having at least one reference form (27b, 24), which defines the circumferential position of the extension piece (2) and via which reference form the circumferential position of the extension piece (2) can be transferred to a working model (M), **characterized in that** the extension piece (2), between the reference form (27b, 24) and the threaded stem (29), has a non-cylindrical outer contour with screw-in surfaces (21) via which the extension piece (2) can be screwed into the dental implant (1) with a tool (3) engaging on them.

2. Extension piece according to Claim 1,
**characterized by** a mating shoulder (25) via which the extension piece (2) can be supported on an implant shoulder (10) of the dental implant (1), by which means the position of the extension piece in the axial direction can be transferred.

3. Extension piece according to Claim 1 or 2,
**characterized in that** the head part (20) is of substantially cylindrical design and has at its upper end a reference surface (24) of the reference form, which reference surface is formed by a cut edge of a semicircular cylinder (23) extending parallel to the screw axis (A) of the extension piece (2).

4. Extension piece according to Claim 3,
**characterized in that** a bevel (27a) is provided in the area of the transition from the reference surface (24) to the outer surface (27b) of the semicircular cylinder (23).

5. Extension piece according to one of Claims 1 to 4, **characterized in that** the extension piece is made of a metallic, non-oxidizing, high-melting-point alloy, in particular of a composition of 60% Au, 19% Pt, 20% Pd, 1% Ir, the melting range being between 1400° and 1490° Celsius.

6. Extension piece (2) according to one of Claims 1 to 5, **characterized by** a first contour (22) onto which a transfer aid (4) with a complementarily shaped second contour (45) can be clamped and/or snapped, and the first contour (22) is arranged between the screw-in surfaces (21) and the reference form (27b, 24).

7. Transfer aid for transferring the position of a dental implant (1) and of an extension piece (2) according to Claim 6 to a working model (M), with a transfer surface (42) which defines the circumferential position of the transfer aid (4), and a second contour (45) which forms clamping and/or snap-fit means (45) and via which the transfer aid (4) can be secured on the extension piece (2), the transfer surface (42) being shaped to complement a reference form (27b, 24) on the extension piece (2), **characterized by** a base plate (40) in which the transfer surface (42) is formed, the base plate (40) having a form which can be anchored securely against rotation in an impression (93), in particular a non-cylindrical outer contour, and the clamping and/or snap-fit means being formed by a circular lip (44) which protrudes from the base plate (40) and which has the second contour (45) via which the transfer aid (4) can be snapped and/or clamped onto the first contour (22) of the extension element (2).

8. Transfer aid according to Claim 7, **characterized in that** the transfer surface (42) is part of a semicylindrical opening (41) in the base plate (40).

9. Transfer aid according to Claim 8, **characterized in that** the opening (41) extends right through the base plate (40).

10. Transfer aid according to Claim 8 or Claim 9, **characterized in that** a recess (46) is arranged in the transition area between the transfer surface (42) and the semicylindrical inner surface (47).

11. Transfer aid (4) according to one of Claims 7 to 10, **characterized in that** the transfer aid (4) is in one piece, preferably made of a plastic material.

12. Transfer aid according to one of Claims 7 to 11, **characterized in that** the base plate (40) is provided with holes (43) which are arranged radially outside the circular lip (44).

13. Use of an extension piece (2) which can be machined, in particular ground, for a dental implant (1) according to one of Claims 1 to 6, as a transfer part for transferring its own axial and circumferential position to a working model, and as a basis for a retention element (7).

14. Combination of a transfer aid (4) according to one of Claims 7 to 12 and of an extension piece (2) according to one of Claims 1 to 6, and preferably of a dental implant (1), where the transfer surface (42) on the transfer aid (4) is designed complementing to the reference surface (24) of the extension piece (2).

15. Method for taking an impression of the radial and axial position of at least one dental implant (1) implanted in a jaw bone (K) with an extension piece (2) according to one of Claims 1 to 6 fitted in it to a working model (M) and/or for producing a basis for a retention element (7), said method comprising the following steps:
a) screwing the at least one extension piece (2) according to one of Claims 1 to 6 with a reference surface (24) as basis for a retention element (7) into the dental implant (1) or the dental implants (1),
b) producing an impression (93) of the situation of the dental implant (1) and of the extension piece (2) in the patient's mouth by applying an impression compound (90), the extension piece (2) leaving an impression in the impression compound and remaining connected to the dental implant (1) after removal of the impression compound (90) from the mouth,
**characterized by** screwing the at least one extension piece in with a first predetermined torque,
c) removing the extension piece (2) from the implant after removal of the impression compound from the mouth,
d) repositioning the extension piece (2) in the correct position in the impression (93),
e) before or after step d), screwing a manipulation implant (5) with a second torque onto the at least one extension piece (2),
f) producing a working model (M) by casting the manipulation implant or implants (5) into a modeling compound (M4).

16. Method according to Claim 15, **characterized in that** a transfer aid (4) is applied to the extension piece (2), in particular by clamping and/or screwing, before the removal of the impression (93) of the extension piece (2), and wherein the transfer aid (4) remains in the impression compound (90) when the impression (93) is produced.

17. Method according to Claim 15 or 16, **characterized in that** the first predetermined torque is greater than the second torque, wherein in particular the first torque is approximately 35 Ncm, and wherein the second torque approximately corresponds to a manual screwing of the extension piece (2) onto the manipulation implant (5).

18. Method according to one of Claims 15 to 17, **characterized in that**, in step a), the extension piece (2) is turned twice in succession into the dental implant (1).

19. Method according to one of Claims 15 to 18, **characterized in that** the extension piece (2) is machined, in particular ground, after the impression has been taken.

20. Method according to Claim 19, **characterized in that** a position marking (L) is arranged on the extension piece (2) before the machining, and wherein the extension piece (2), for machining, is removed from the working model (M) and in particular fitted onto a holder (6) and machined on the latter.

21. Method according to Claim 19 or 20, **characterized in that** during machining of the extension piece (2), a plateau surface (28) is formed, to which a retention element (7) for mounting a detachable tooth replacement is applied.

22. Method according to Claim 21, **characterized in that** the machined extension piece (2) is screwed into the dental implant (1) with the first predetermined torque.

23. Method according to Claim 21 or 22, **characterized in that**, upon definitive screwing of the machined extension piece (2) into the dental implant (1), a spreading cone (8) is inserted between an inner cone (12) of the dental implant (1) and the extension piece (2).

## Revendications

1. Pièce de prolongement pour un implant dentaire, qui présente une partie de tête (20) qui sert de base pour un élément de retenue (7) et un tourillon fileté (29) par lequel la pièce de prolongement (2) peut être vissée dans l'implant dentaire (1), la pièce de prolongement (2) présentant au moins une forme de référence (27b, 24) qui définit la position périphérique de la pièce de prolongement (2) et au moyen de laquelle la position périphérique de la pièce de prolongement (2) peut être transférée à un modèle de travail (M), **caractérisée en ce qu'**entre la forme de référence (27b, 24) et le tourillon fileté (29), la pièce de prolongement (2) a un contour extérieur non cylindrique qui présente des surfaces de vissage (21) par lesquelles la pièce de prolongement peut être vissée dans l'implant dentaire (1) à l'aide d'un outil (3) qui s'y engage.

2. Pièce de prolongement selon la revendication 1, **caractérisée par** un contre-épaulement (25) au moyen duquel la pièce de prolongement (2) peut s'appuyer sur un épaulement (10) prévu sur l'implant dentaire (1), ce qui permet de transférer la position de la pièce de prolongement dans la direction axiale.

3. Pièce de prolongement selon la revendication 1 ou 2, **caractérisée en ce que** la pièce de tête (20) présente une forme essentiellement cylindrique et présente à son extrémité supérieure une face de référence (24) de la forme de référence qui est formée par une surface qui coupe un cylindre semi-circulaire (23), et qui s'étend parallèlement à l'axe du vissage (A) de la pièce de prolongement (2).

4. Pièce de prolongement selon la revendication 3, **caractérisée en ce qu'**un chanfrein (27a) est prévu dans la partie qui forme la transition entre la surface de référence (24) et la surface extérieure (27b) du cylindre semi-circulaire (23).

5. Pièce de prolongement selon l'une des revendications 1 à 4, **caractérisée en ce que** la pièce de prolongement est constituée d'un alliage métallique, non oxydable et à haut point de fusion, qui présente en particulier une composition de 60 % Au, 19 % Pt, 20 % Pd, 1 % Ir et dont la plage de fusion est comprise entre 1 400° et 1 490° Celsius.

6. Pièce de prolongement (2) selon l'une des revendications 1 à 5, **caractérisée par** un premier contour (22) sur lequel un accessoire de transfert (4) qui présente un deuxième contour (45) de forme complémentaire appropriée peut être serré et/ou encliqueté, le premier contour (22) étant disposé entre des surfaces de vissage (21) et la forme de référence (27b, 24).

7. Accessoire de transfert destiné à transférer sur un modèle de travail (M) la position d'un implant dentaire (1) et d'une pièce de prolongement (2) selon la revendication 6 et qui présente une surface de transfert (42) qui définit la position périphérique de l'accessoire de transfert (4) et un deuxième contour (45) qui forme un moyen de serrage et/ou d'encliquetage (45) et par lequel l'accessoire de transfert (4) peut être fixé sur la pièce de prolongement (2), la surface de transfert (42) formée sur la pièce de prolongement (2) étant complémentaire d'une forme de référence (27b, 24), **caractérisé en ce que** la surface de transfert (42) est formée dans une plaque de socle (40) ayant une forme qui permet de l'ancrer dans une empreinte (93) de manière à être bloquée en rotation, en particulier un contour extérieur non cylindrique, les moyens de serrage et/ou d'encliquetage étant formés par une lèvre circulaire (44) qui déborde de la plaque de socle (40) et qui présente le deuxième contour (45) au moyen duquel l'accessoire de transfert (4) peut être encliqueté et/ou serré sur le premier contour (22) de l'élément de prolongement (2).

8. Accessoire de transfert selon la revendication 7, **caractérisé en ce que** la surface de transfert (42) est partie d'une ouverture semi-cylindrique (41) ménagée dans la plaque de socle (40).

9. Accessoire de transfert selon la revendication 8, **caractérisé en ce que** l'ouverture (41) traverse la plaque de socle (40).

10. Accessoire de transfert selon la revendication 8 ou 9, **caractérisé en ce qu'**un évidement (46) est ménagé dans la zone de la transition entre la surface de transfert (42) et la surface intérieure semi-cylindrique (47).

11. Accessoire de transfert (4)' selon l'une des revendications 7 à 10, **caractérisé en ce que** l'accessoire de transfert (4) est réalisé en une seule pièce, de préférence en matière synthétique.

12. Accessoire de transfert selon l'une des revendications 7 à 11, **caractérisé en ce que** la plaque de socle (40) est dotée de trous (43) disposés radialement à l'extérieur de la lèvre circulaire.(44).

13. Utilisation d'une pièce de prolongement (2) selon l'une des revendications 1 à 6, apte à être usinée et en particulier à être meulée, comme pièce de transfert pour un implant dentaire (1), pour pouvoir en transférer la propre position axiale et périphérique sur un modèle de travail, ainsi que comme base pour un élément de retenue (7).

14. Combinaison d'un accessoire de transfert (4) selon l'une des revendications 7 à 12 et d'une pièce de prolongement (2) selon l'une des revendications 1 à 6, et de préférence d'un implant dentaire (1), dans laquelle la surface de transfert (42) prévue sur l'accessoire de transfert (4) est complémentaire de la surface de référence (24) de la pièce de prolongement (2).

15. Procédé de modification de la position radiale et la position axiale d'au moins un implant dentaire (1) implanté dans l'os (K) d'une mâchoire et dans lequel une pièce de prolongement (2) selon l'une des revendications 1 à 6 a été insérée, sur un modèle de travail (M) et/ou pour établir une base pour un élément de retenue (7), lequel procédé consiste en les étapes ci-dessous :
a) vissage dans l'implant dentaire (1) ou dans les implants dentaires (1) de la ou des pièces de prolongement (2) selon l'une des revendications 1 à 6, qui présentent une surface de référence (24) comme base pour un élément de retenue (7),
b) création d'une empreinte (93) de la situation de l'implant dentaire (1) et de la pièce de prolongement (2) dans la bouche du patient par application d'une pâte d'empreinte (90), tandis qu'après l'enlèvement de la pâte d'empreinte (90) de la bouche, la pièce de prolongement (2) laisse une empreinte dans la pâte d'empreinte et reste reliée à l'implant dentaire (1),
**caractérisé par** le vissage de la ou des pièces de prolongement avec un premier couple de rotation prédéterminé,
c) enlèvement de la pièce de prolongement (2) de l'implant dentaire après l'enlèvement de la pâte d'empreinte de la bouche,
d) repositionnement de la pièce de prolongement (2) dans sa position correcte dans l'empreinte (93),
e) avant ou après l'étape d), vissage d'un implant de manipulation (5) avec un deuxième couple de rotation sur la ou les pièces de prolongement (2) et
f) création d'un modèle de travail (M) par coulée d'une pâte de moulage (M4) sur le ou les implants de manipulation (5).

16. Procédé selon la revendication 15, **caractérisé en ce qu'**avant l'enlèvement de l'empreinte (93) de la pièce de prolongement (2), on place sur la pièce de prolongement (2) un accessoire de transfert (4), en particulier en l'y serrant et/ou en l'y vissant, et **en ce que** lors de la création de l'empreinte (93), l'accessoire de transfert (4) reste dans la pâte d'empreinte (90).

17. Procédé selon la revendication 15 ou 16, **caractérisé en ce que** le premier couple de rotation prédéterminé est plus grand que le deuxième couple de rotation, **en ce qu'**en particulier le premier couple de rotation est d'environ 35 Ncm et **en ce que** le deuxième couple de rotation correspond sensiblement à la fixation par vissage à la main de la pièce de prolongement (2) sur l'implant de manipulation (5).

18. Procédé selon l'une des revendications 15 à 17, **caractérisé en ce qu'**à l'étape a), la pièce de prolongement (2) est vissée deux fois successivement dans l'implant dentaire (1).

19. Procédé selon l'une des revendications 15 à 18, **caractérisé en ce que** la pièce de prolongement (2) est usinée et en particulier meulée après la prise de l'empreinte.

20. Procédé selon la revendication 19, **caractérisé en ce qu'**avant l'usinage, un repère de position (L) est placé sur la pièce de prolongement (2) et **en ce que** pour l'usinage, la pièce de prolongement (2) est enlevée du modèle de travail (M) et est placée en particulier sur un support (6) pour y être usinée.

21. Procédé selon les revendications 19 ou 20, **caractérisé en ce que** lors de l'usinage de la pièce de prolongement (2), on forme une surface en plateau (28) sur laquelle un élément de retenue (7) est placé pour retenir une prothèse amovible de la dent.

22. Procédé selon la revendication 21, **caractérisé en ce que** la pièce de prolongement (2) usinée est vissée dans l'implant dentaire (1) avec le premier couple de rotation prédéterminé.

23. Procédé selon les revendications 21 ou 22, **caractérisé en ce que** lors du vissage définitif de la pièce de prolongement (2) usinée dans l'implant dentaire (1), on introduit un cône d'écartement (8) entre un cône intérieur (12) de l'implant dentaire (1) et la pièce de prolongement (2).
